# EUROPÄISCHE PATENTSCHRIFT

(11) **EP 3 780 288 B1**
(45) Veröffentlichungstag und Bekanntmachung des Hinweises auf die Patenterteilung: **15.10.2025**
(21) Anmeldenummer: 20195515.0
(22) Anmeldetag: 06.07.2018
(51) Int. Cl.: H01R 13/62, B62J 6/02

(54) **VERSCHLUSSVORRICHTUNG MIT ELEKTRISCHEM KONTAKT**
CLOSURE DEVICE WITH ELECTRICAL CONTACT
DISPOSITIF DE FERMETURE À CONTACT ÉLECTRIQUE

(30) Priorität: 14.07.2017 DE 102017212149
(43) Veröffentlichungstag der Anmeldung: 17.02.2021
(62) Teilanmeldung aus: 18746583.6
(73) Patentinhaber: Fidlock GmbH, 30659 Hannover (DE)
(72) Erfinder: HILLER, Lasse, 30952 Ronnenberg (DE); SIEBERT, Artur, 30459 Hannover (DE); FIEDLER, Joachim, 30519 Hannover (DE)
(74) Vertreter: Maikowski & Ninnemann Patentanwälte Partnerschaft mbB

(56) Entgegenhaltungen:
- EP-A1- 1 220 369
- EP-A1- 2 955 092
- WO-A1-2008/068241
- WO-A1-2014/090926
- WO-A1-2016/166538
- FR-A1- 2 638 907
- US-A- 5 909 100
- US-A1- 2009 215 283

## Beschreibung

Die Erfindung betrifft eine Verschlussvorrichtung zum Verbinden zweier Teile nach dem Oberbegriff des Anspruchs 1.

Eine derartige Verschlussvorrichtung umfasst ein erstes Verschlussteil, das einen ersten Eingriffsvorsprung aufweist, und ein zweites Verschlussteil, das einen zweiten Eingriff Vorsprung aufweist. Zum Schließen der Verschlussvorrichtung können das erste Verschlussteil und das zweite Verschlussteil aneinander angesetzt werden und sind in einer Schließstellung mechanisch miteinander verbunden, indem der erste Eingriffsvorsprung und der zweite Eingriffsvorsprung in der Schließstellung formschlüssig miteinander in Eingriff stehen. Eine zwischen dem ersten Verschlussteil und dem zweiten Verschlussteil wirkende magnetische Einrichtung dient dazu, das Ansetzen des ersten Verschlussteils und des zweiten Verschlussteils aneinander durch Bereitstellen einer magnetischen Anziehungskraft zu unterstützen.

Bei einer aus der KR 20 1996 009 916 Y1 bekannten Verschlussvorrichtung wird ein Verschlussteil über eine Befestigungsplatte an einem Gegenstand befestigt. Die Befestigungsplatte weist hierbei Öffnungen auf, die mit Eingriffsvorsprüngen des Verschlussteils in Eingriff gebracht werden können. An den Öffnungen sind Federzungen vorgesehen, die beim Ansetzen des Verschlussteils an die Befestigungsplatte elastisch ausweichen und nach Herstellen einer formschlüssigen Verbindung der Eingriffsvorsprünge des Verschlussteils mit dem Rand der Öffnungen der Befestigungsplatte zurück in ihre Grundstellung gelangen, um in der Grundstellung ein Lösen der Eingriffsvorsprünge aus ihrem Eingriff zu sperren.

Bei einem aus der DE 43 12 032 C2 bekannten Verschluss ist an einem ersten Verschlussteil ein Zapfen angeordnet, der mit einer Eingriffsaussparung an einem zweiten Verschlussteil in Eingriff gebracht werden kann. Beim Ansetzen drängt der Zapfen ein Sperrelement beiseite, das nach Herstellen des Eingriffs des Zapfens des ersten Verschlussteils mit der Eingriffsaussparung des zweiten Verschlussteils zurück in eine Grundstellung gelangt, in der der Eingriff des Zapfens mit der Eingriffsaussparung gesperrt ist. Zum Lösen des Zapfens aus der Eingriffsaussparung kann das Sperrelement betätigt werden, um den Zapfen freizugeben und aus der Eingriffsaussparung zu entfernen.

Es besteht ein Bedürfnis nach Verschlussvorrichtungen, die in haptisch angenehmer, leichtgängiger Weise zu schließen sind, in der Schließstellung einen festen Halt und damit eine sichere Verbindung zwischen zu verbindenden Teilen gewährleisten und zudem in leichter, komfortabler Weise zu öffnen sind.

Zudem kann wünschenswert sein, elektrische Baugruppen miteinander zu verbinden, um elektrische Signale zwischen den elektrischen Baugruppen zu übertragen, zum Beispiel um eine Energieversorgung bereitzustellen oder Datensignale zu übertragen.

Die US 2009/0215283 A1 beschreibt einen Verbinder, der einen Stecker und eine Buchse aufweist. Der Stecker weist eine Mehrzahl von Kontakten und einen ersten Magneten auf. Die Buchse bildet eine Mehrzahl von Einstecklöchern aus und weist einen zweiten Magneten auf. Über die Magnete soll eine magnetische Abstoßung zur Verfügung gestellt werden, wenn der Stecker und die Buchse miteinander verbunden sind.

Die WO 2016/166538 A1 beschreibt einen elektrischen Steckverbinder mit einem ersten Verbinderteil und einem zweiten Verbinderteil, die unter magnetischer Anziehung aneinander angesetzt werden können.

Die WO 2008/068241 A1 beschreibt eine Fahrzeugverglasung mit einem elektrischen Steckverbinder.

Aufgabe der vorliegenden Erfindung ist es, eine Verschlussvorrichtung bereitzustellen, die ein leichtes Schließen, einen festen Halt in der Schließstellung und ein einfaches Öffnen ermöglicht und die insbesondere zum Verbinden elektrischer Baugruppen geeignet sein kann.

Diese Aufgabe wird durch einen Gegenstand mit den Merkmalen des Anspruchs 1 gelöst.

Demnach weist das erste Verschlussteil ein erstes elektrisches Kontaktelement auf, und das zweite Verschlussteil weist ein zweites elektrisches Kontaktelement auf. In der Schließstellung sind das erste elektrische Kontaktelement und das zweite elektrische Kontaktelement elektrisch kontaktierend miteinander in Wirkverbindung.

Über die Verschlussvorrichtung kann somit, bei mechanischem Halt zweier Baugruppen aneinander, eine elektrische Kontaktierung hergestellt werden. Die Verschlussvorrichtung ermöglicht somit in einfacher Weise ein Ansetzen von Baugruppen aneinander, bei einfachem, magnetisch unterstütztem Schließvorgang und bei zudem mechanisch festem Halt in der Schließstellung. Durch das Schließen der Verschlussvorrichtung wird gleichzeitig auch eine elektrische Kontaktierung von Kontaktelementen bewirkt, sodass in der Schließstellung die Verschlussteile der Verschlussvorrichtung auch elektrisch aneinander angeschlossen sind.

Die vorliegende Verschlussvorrichtung sieht an zwei Verschlussteilen jeweils (zumindest) einen Eingriffsvorsprung vor, der nach Art eines Hinterschnitts ausgebildet ist und starr an einem Grundkörper des jeweils zugeordneten Verschlussteils angeordnet sein kann. Die Eingriffsvorsprünge werden zum Schließen der Verschlussvorrichtung miteinander in Eingriff gebracht, wobei hierzu die Eingriffsvorsprünge zum Beispiel soweit aneinander vorbeibewegt werden, bis der erste Eingriffsvorsprung in die Eingriffsrichtung formschlüssig in Eingriff mit dem zweiten Eingriffsvorsprung geschoben werden kann. In der Schließstellung stellen die Eingriffsvorsprünge einen festen Halt der Verschlussteile aneinander her, so dass die Verschlussvorrichtung belastet werden kann, ohne dass sich die Verschlussteile voneinander lösen.

Um in der Schließstellung ein ungewünschtes Lösen der Verschlussteile voneinander auszuschließen, ist zusätzlich ein Sperrelement vorgesehen, das beispielsweise als eine an einem Grundkörper eines der Verschlussteile angeordnete elastische Federzunge oder als ein federnd an dem Grundkörper angeordnetes, zum Beispiel schwenkbares Sperrteil ausgebildet ist. Das Sperrelement weicht beim Ansetzen des ersten Verschlussteils an das zweite Verschlussteil derart aus, dass der erste Eingriffsvorsprung des ersten Verschlussteils in die Eingriffsrichtung in Eingriff mit dem zweiten Eingriffsvorsprung des zweiten Verschlussteils geschoben werden kann. Beim Ansetzen wird das Sperrelement somit derart beiseite gedrängt, dass der erste Eingriffsvorsprung in Eingriff mit dem zweiten Eingriffsvorsprung geführt werden kann. Bei oder nach Herstellung des Eingriffs gelangt das Sperrelement zurück in seine Grundstellung und sperrt in dieser Grundstellung den formschlüssigen Eingriff des ersten Eingriffsvorsprungs mit dem zweiten Eingriffsvorsprung entgegen der Eingriffsrichtung. Der Halt des ersten Eingriffsvorsprungs an dem zweiten Eingriffsvorsprung und somit des ersten Verschlussteils an dem zweiten Verschlussteil ist damit gesichert, so dass die Verschlussvorrichtung nicht in unbeabsichtigter Weise geöffnet werden kann.

Zusätzlich sind magnetische Mittel vorgesehen, die beispielsweise in Form eines Magneten an dem ersten Verschlussteil und eines Magneten an dem zweiten Verschlussteil oder in Form eines Magneten an einem der Verschlussteile und eines magnetischen Ankers in Form eines aus einem ferromagnetischen Material hergestellten Bauteils an dem anderen der Verschlussteile ausgebildet sind. Die magnetischen Mittel wirken zwischen dem ersten Verschlussteil und dem zweiten Verschlussteil, indem sie beim Ansetzen des ersten Verschlussteils an das zweite Verschlussteil magnetisch anziehend zusammenwirken und somit das erste Verschlussteil magnetisch unterstützt in Eingriff mit dem zweiten Verschlussteil gezogen wird.

Die magnetischen Mittel können hierbei vorteilhafterweise so dimensioniert sein, dass der Eingriff des ersten Eingriffsvorsprungs mit dem zweiten Eingriffsvorsprungs beim Ansetzen der Verschlussteile aneinander weitestgehend selbsttätig hergestellt wird und insbesondere das Ausweichen des Sperrelements beim Ansetzen der Verschlussteile aneinander in magnetisch unterstützter Weise weitestgehend selbsttätig erfolgt. Auf diese Weise wird ein leicht zu schließender Verschluss bereitgestellt, bei dem die Verschlussteile zum Schließen lediglich in vergleichsweise unpräziser Weise aneinander angesetzt werden müssen und das eigentliche Schließen des Verschlusses dann in magnetisch unterstützter Weise weitestgehend selbsttätig abläuft.

Das Sperrelement kann so ausgestaltet sein, dass es beim Herstellen des Eingriffs oder erst nach dem Herstellen des Eingriffs zwischen dem ersten Eingriffsvorsprung und dem zweiten Eingriffsvorsprung wieder zurück in seine Grundstellung gelangt. Das Sperrelement kann beispielsweise zurück in seine Grundstellung schnappen, sobald der Eingriff hergestellt ist (also nach Eingriffsherstellung). Möglich ist aber auch, dass bereits bei Eingriffsherstellung das Sperrelement aufgrund seiner elastischen Ausgestaltung eine Vorspannung auf das andere Verschlussteil bewirkt, die den ersten Eingriffsvorsprung in die Eingriffsrichtung in Eingriff mit dem zweiten Eingriffsvorsprung drückt und somit das Ineingriffbringen beim Herstellen des Eingriffs bereits unterstützt.

Das Sperrelement kann zum Beispiel schwenkbar an dem zugeordneten Verschlussteil angeordnet sein. Das Sperrelement kann hierbei in Richtung seiner Grundstellung federbelastet sein, sodass nach Auslenkung beim Ansetzen das Sperrelement selbsttätig zurück in seine Grundstellung gelangt, wenn die Verschlussteile in der Schließstellung sind oder sich ihrer Schließstellung nähern.

In der Schließstellung steht der erste Eingriffsvorsprung des ersten Verschlussteils formschlüssig in Eingriff mit dem zweiten Eingriffsvorsprung des zweiten Verschlussteils. Dieser Eingriff ist dabei durch das Sperrelement gesperrt, indem das Sperrelement ein Bewegen der Verschlussteile zueinander entgegen der Eingriffsrichtung verhindert, so dass die Eingriffsvorsprünge nicht entgegen der Eingriffsrichtung außer Eingriff voneinander gebracht werden können. Zum Öffnen der Verschlussvorrichtung kann die Sperrung aufgehoben werden, zum Beispiel indem das Sperrelement wiederum aus seiner Grundstellung ausgelenkt wird, beispielsweise durch händische Betätigung. Ist die Sperrung des formschlüssigen Eingriffs zwischen den Eingriffsvorsprüngen des ersten Verschlussteils und des zweiten Verschlussteils aufgehoben, können die Eingriffsvorsprünge entgegen der Eingriffsrichtung außer Eingriff voneinander gebracht werden, sodass die Verschlussteile voneinander gelöst werden können.

Vorteilhafterweise weisen das erste Verschlussteil oder/und das zweite Verschlussteil eine Auflaufschräge auf, die derart beschaffen ist, dass beim Ansetzen des ersten Verschlussteils an das zweite Verschlussteil in eine von der Eingriffsrichtung unterschiedliche Schließrichtung der erste Eingriffsvorsprung auf den zweiten Eingriffsvorsprung aufläuft und das erste Verschlussteil entgegen der Eingriffsrichtung gedrängt wird, bis der erste Eingriffsvorsprung mit dem zweiten Eingriffsvorsprung in die Eingriffsrichtung in Eingriff bringbar ist. Die Schließrichtung ist beispielsweise quer zur Eingriffsrichtung gerichtet. Die Auflaufschräge beschreibt eine schiefe Ebene, die unter einem Winkel zwischen z. B. 30° bis 60°, insbesondere 45 ° (bezogen auf die Flächennormalen der schiefen Ebene) zu der Schließrichtung und der Eingriffsrichtung gerichtet ist. Eine derartige Auflaufschräge erleichtert das Ansetzen der Verschlussteile aneinander. Insbesondere dann, wenn die Eingriffsvorsprünge als starre Elemente an einem Grundkörper der Verschlussteile ausgebildet sind, müssen die Eingriffsvorsprünge zum Ineingriffbringen aneinander vorbei bewegt werden, wobei hierzu auch erforderlich ist, den ersten Eingriffsvorsprung (der nach Art eines Hinterschnitts ausgebildet ist) entgegen der Eingriffsrichtung soweit relativ zu dem zweiten Eingriffsvorsprung zu bewegen, dass die nach Art von Hinterschnitten ausgebildeten Eingriffsvorsprünge miteinander in Eingriff gebracht werden können. Diese Bewegung entgegen der Eingriffsrichtung wird durch die Auflaufschräge unterstützt, entlang derer die Verschlussteile aneinander entlang gleiten, bis die Eingriffsvorsprünge miteinander in Eingriff gebracht werden können.

Die magnetische Einrichtung ist vorteilhafterweise durch zumindest ein erstes Magnetelement des ersten Verschlussteils und zumindest ein zweites Magnetelement des zweiten Verschlussteils gebildet. Die Magnetelemente sind dabei vorteilhafterweise derart an den Verschlussteilen angeordnet, dass sie sich beim Ansetzen des ersten Verschlussteils an das zweite Verschlussteil magnetisch anziehen, wobei das erste Magnetelement und das zweite Magnetelement jedoch in der Schließstellung - betrachtet entlang der Eingriffsrichtung - derart zueinander versetzt sind, dass eine magnetische Anziehungskraft auf das erste Verschlussteil in die Eingriffsrichtung wirkt. Die magnetische Einrichtung bewirkt somit eine Vorspannung zwischen den Verschlussteilen, die versucht, den ersten Eingriffsvorsprung in die Eingriffsrichtung in Eingriff mit dem zweiten Eingriffsvorsprung zu ziehen, und somit das Ineingriffbringen und auch den Halt des ersten Eingriffsvorsprungs in dem zweiten Eingriffsvorsprung magnetisch unterstützt. Entlang der Eingriffsrichtung betrachtet ist das Magnetelement des ersten Verschlussteils somit vor dem Magnetelement des zweiten Verschlussteils angeordnet, so dass die magnetische Anziehungskraft zwischen den Magneten zumindest eine Kraftkomponente in die Eingriffsrichtung aufweist.

Grundsätzlich wirkt die magnetische Einrichtung magnetisch anziehend in die Schließrichtung, die beispielsweise in etwa senkrecht zur Eingriffsrichtung gerichtet sein kann. Aufgrund der Wirkung der magnetischen Einrichtung werden die Verschlussteile beim Ansetzen in die Schließrichtung somit gegenseitig angezogen, wobei die Kraftwirkung zwischen den magnetischen Mitteln derart ist, dass der erste Eingriffsvorsprung des ersten Verschlussteils in magnetisch unterstützter Weise in Eingriff mit dem zweiten Eingriffsvorsprung des zweiten Verschlussteils gebracht wird und somit das Schließen der Verschlussvorrichtung in magnetisch unterstützter Weise weitestgehend selbsttätig erfolgen kann.

Beispielsweise kann an jedem Verschlussteil je ein Paar von zwei Magnetelementen vorgesehen sein, die entlang der Eingriffsrichtung zueinander versetzt sind. Auf diese Weise kann einem Verkippen der Verschlussteile zueinander beim Schließen der Verschlussvorrichtung entgegengewirkt werden. Zudem kann eine vorteilhafte Kraftwirkung in Richtung eines Eingriffs der Eingriffsvorsprünge ineinander erzielt werden.

Die Magnetelemente können durch Permanentmagnetelemente ausgestaltet sein, wobei sich die Magnetelemente der Verschlussteile in diesem Fall mit ungleichnamigen Magnetpolen gegenüberstehen und somit magnetisch anziehend zusammenwirken. Denkbar und möglich ist aber auch, dass die Magnetelemente einerseits durch Permanentmagnetelemente und andererseits zum Beispiel durch ferromagnetische Elemente (magnetische Anker) ausgebildet sind, die sich gegenüberstehen und zusammenwirken, sodass eine magnetische Anziehungskraft zwischen den Verschlussteilen besteht.

Der erste Eingriffsvorsprung an dem ersten Verschlussteil und der zweite Eingriffsvorsprung an dem zweiten Verschlussteil sind vorteilhafterweise so geformt und beschaffen, dass sich in belastetem Zustand der Verschlussvorrichtung eine Verstärkung des Eingriffs ergibt. Beispielsweise können an dem ersten Verschlussteil und dem zweiten Verschlussteil jeweils zwei Eingriffsvorsprünge vorgesehen sein, die sich unter einem (spitzen) Winkel zueinander erstrecken, so dass sich eine V-Form ergibt. Die Spitze des Vs weist hierbei in die Eingriffsrichtung, die vorzugsweise auch einer Belastungsrichtung entspricht, so dass im belasteten Zustand der Halt der Eingriffsvorsprünge des ersten Verschlussteils in den Eingriffsvorsprüngen des zweiten Verschlussteils verstärkt ist.

Zudem ist die V-Form auch mit Blick auf zwei weitere Aspekte vorteilhaft. Erstens werden durch die V-förmige Anordnung Kräfte, die innerhalb eines durch die V-Form vorgegebenen Winkels von der Belastungsrichtung abweichen, vorteilhaft durch den Formschluss zwischen den ersten Eingriffsvorsprüngen und den zweiten Eingriffsvorsprüngen abgefangen. Zweitens stabilisiert die V-Form derart, dass Schwenkkräfte, die am Verschluss in Schließstellung um die Schließrichtung wirken, auf einer vergleichsweise großen effektiven Breite (im Vergleich zur Tiefe der Eingriffsvorsprünge) abgefangen werden können. Die effektive Breite beträgt hier näherungsweise der Breite der V-förmig angeordneten Eingriffsvorsprünge in der Belastungsrichtung.

Grundsätzlich sind jedoch auch andere Formgebungen der Eingriffsvorsprünge an dem ersten Verschlussteil und dem zweiten Verschlussteil denkbar. Beispielsweise können der erste Eingriffsvorsprung und der zweite Eingriffsvorsprung jeweils bogenförmig ausgestaltet sein.

Die zwei ersten Eingriffsvorsprünge des ersten Verschlussteils und/oder die zwei zweiten Eingriffsvorsprünge des zweiten Verschlussteils können miteinander verbunden sein und somit eine durchgehende, aber gegebenenfalls abgewinkelte Eingriffseinrichtung schaffen. Die Eingriffsvorsprünge können aber auch voneinander getrennt sein, sodass eine Lücke zwischen den zwei ersten Eingriffsvorsprüngen und/oder den zwei zweiten Eingriffsvorsprünge besteht.

Es ist auch denkbar und möglich, dass an jedem Verschlussteil mehrere Eingriffsvorsprünge angeordnet sind, die entlang der Eingriffsrichtung zueinander versetzt sind. Die Eingriffsvorsprünge können hierbei nach Art einer Reihe oder nach Art einer Matrix an dem jeweiligen Verschlussteil angeordnet sein, so dass zum Schließen mehrere Eingriffsvorsprünge miteinander in Eingriff gebracht werden. Die Anzahl der Sperrelemente muss hierbei nicht der Anzahl der Eingriffsvorsprünge entsprechen. Grundsätzlich ist ein einziges Sperrelement zum Sperren der Bewegung des ersten Verschlussteils entgegen der Eingriffsrichtung relativ zum zweiten Verschlussteil ausreichend. Vorteilhafterweise können aber auch mehrere Sperrelemente vorhanden sein.

Eingriffsvorsprünge können beispielsweise auch periodisch oder in Gruppen an den Verschlussteilen angeordnet sein, so dass die Verschlussteile in unterschiedlichen Schließstellungen miteinander in Eingriff gebracht werden können. Insbesondere können die Eingriffsvorsprünge auch durch nach Art einer Reihe oder Matrix angeordnete Gruppen von V-förmigen oder bogenförmigen Eingriffsvorsprüngen verwirklicht sein.

In einer Ausgestaltung weist das erste Verschlussteil einen zur ersten Eingriffseinrichtung zusätzlichen Eingriffsvorsprung auf, und gleichermaßen weist das zweite Verschlussteil einen zur zweiten Eingriffseinrichtung zusätzlichen Eingriffsvorsprung auf. Der zur ersten Eingriffseinrichtung zusätzliche Eingriffsvorsprung ist entlang der Eingriffsrichtung zu den ersten Eingriffsvorsprüngen versetzt, und der zur zweiten Eingriffseinrichtung zusätzliche Eingriffsvorsprung ist entlang der Eingriffsrichtung zu den zweiten Eingriffsvorsprüngen versetzt. Hierbei kann vorgesehen sein, dass der zur ersten Eingriffseinrichtung zusätzliche Eingriffsvorsprung und der zur zweiten Eingriffseinrichtung zusätzliche Eingriffsvorsprung quer (und geradlinig) zur Eingriffsrichtung erstreckt sind. Im Unterschied zu den zum Beispiel V-förmig zueinander angeordneten ersten Eingriffsvorsprüngen und zweiten Eingriffsvorsprüngen erstreckt sich der zusätzliche Eingriffsvorsprung an jedem Verschlussteil somit quer zur Eingriffsrichtung.

Ist die Verschlussvorrichtung bei bestimmungsgemäßer Verwendung so angeordnet, dass sich die Eingriffsrichtung vertikal erstreckt, so sind die zusätzlichen Eingriffsvorsprünge vorteilhafterweise oberhalb der ersten Eingriffseinrichtung und der zweiten Eingriffseinrichtung angeordnet, was einen vorteilhaften Halt der Verschlussvorrichtung bewirken kann.

In einer Ausgestaltung weist zumindest eins der elektrischen Kontaktelemente eine Kontaktfeder auf, die bei Ansetzen der Verschlussteile aneinander elastisch verformt wird. Aufgrund der Kontaktfeder gelangen die Kontaktelemente der Verschlussteile bei Ansetzen der Verschlussteile aneinander somit unter elastischer Vorspannung miteinander in Anlage, sodass eine günstige elektrische Kontaktierung bereitgestellt werden kann. In der Schließstellung drückt die Kontaktfeder des einen Kontaktelements gegen das andere Kontaktelement, sodass eine zuverlässige elektrische Kontaktierung gewährleistet ist.

Vorteilhafterweise schleifen die Kontaktelemente der Verschlussteile bei Schließen der Verschlussvorrichtung aneinander. Die Kontaktelemente können hierbei jeweils an einem Grundkörper des zugeordneten Verschlussteils angeordnet sein und mit Kontaktflächen derart aufeinander zu weisen, dass die Kontaktelemente bei Ineingriffbringen der Eingriffsvorsprünge der Verschlussteile in die Eingriffsrichtung tangential aneinander schleifen. Zusätzlich oder alternativ kann auch vorgesehen sein, dass die Kontaktelemente beim Öffnen der Verschlussvorrichtung, also beim Lösen der Verschlussteile voneinander entgegen der Eingriffsrichtung, aneinander schleifen. Durch Schleifen der Kontaktelemente aneinander kann zum Beispiel erreicht werden, dass eine eventuell an den Kontaktelementen vorhandene Verschmutzung oder dergleichen beseitigt wird, sodass die elektrische Kontaktierung zwischen den Verschlussteilen verbessert sein kann.

In einer Ausgestaltung weist eins der Verschlussteile ein Führungselement zum Beispiel in Form eines von einem Grundkörper vorstehenden Vorsprungs auf, der beim Ansetzen der Verschlussteile mit einer Führungsöffnung des anderen Verschlussteils in Eingriff gelangt. Über das Führungselement und dessen Eingriff in die zugeordnete Führungsöffnung des anderen Verschlussteils wird somit eine Führung der Verschlussteile aneinander bereitgestellt, insbesondere entlang der Eingriffsrichtung, in die die Eingriffsvorsprünge der Verschlussteile beim Ansetzen der Verschlussteile miteinander in Eingriff zu bringen sind.

In einer weiteren Ausgestaltung kann jedes Verschlussteil einen Grundkörper aufweisen, der aus zwei Teilkörpern zusammengesetzt ist. Die Teilkörper können hierbei aus unterschiedlichen Materialien gefertigt sein, zum Beispiel aus unterschiedlichen Kunststoffmaterialien (zum Beispiel mit einer unterschiedlichen Härte) oder einerseits aus einem Metallmaterial und andererseits aus einem Kunststoffmaterial. Auf diese Weise kann zum Beispiel ein innerer Teilkörper aus einem elektrisch isolierenden Material zum elektrischen Isolieren des an dem jeweiligen Verschlussteil angeordneten Kontaktelements gefertigt sein, während ein äußerer Teilkörper zum Beispiel aus einem Metallmaterial zum Bereitstellen eines belastbaren, stoßfesten Gehäuses gefertigt sein kann.

Nach einem weiteren Aspekt umfasst eine Verschlussvorrichtung zum lösbaren Verbinden zweier Teile
- ein erstes Verschlussteil, das einen ersten Eingriffsvorsprung zur Ausbildung einer ersten Eingriffseinrichtung aufweist,
- ein zweites Verschlussteil, das einen zweiten Eingriffsvorsprung zur Ausbildung einer zweiten Eingriffseinrichtung aufweist, wobei das erste Verschlussteil und das zweite Verschlussteil zum Schließen der Verschlussvorrichtung aneinander ansetzbar, indem der erste Eingriffsvorsprung und der zweite Eingriffsvorsprung in eine Eingriffsrichtung formschlüssig miteinander in Eingriff bringbar sind, sodass das erste Verschlussteil und das zweite Verschlussteil in einer Schließstellung, in der der erste Eingriffsvorsprung und der zweite Eingriffsvorsprung formschlüssig miteinander in Eingriff stehen, mechanisch miteinander verbunden sind, und
- eine zwischen dem ersten Verschlussteil und dem zweiten Verschlussteil wirkende magnetische Einrichtung, die ausgebildet ist, das Ansetzen des ersten Verschlussteils und des zweiten Verschlussteils aneinander durch Bereitstellen einer magnetischen Anziehungskraft zu unterstützen.

Zusätzlich ist vorgesehen, dass das erste Verschlussteil einen zur ersten Eingriffseinrichtung zusätzlichen Eingriffsvorsprung und das zweite Verschlussteil einen zur zweiten Eingriffseinrichtung zusätzlichen Eingriffsvorsprung aufweisen, wobei der zur ersten Eingriffseinrichtung zusätzliche Eingriffsvorsprung entlang der Eingriffsrichtung zu der ersten Eingriffseinrichtung versetzt ist und der zur zweiten Eingriffseinrichtung zusätzliche Eingriffsvorsprung entlang der Eingriffsrichtung zu den zweiten Eingriffsvorsprüngen versetzt ist.

Vorteilhafte Ausgestaltungen sind in den hierauf bezogenen Unteransprüchen angegeben, wobei zur Erläuterung insbesondere auch auf das vorangehend Ausgeführte verwiesen werden soll.

Insbesondere können der erste Eingriffsvorsprung an dem ersten Verschlussteil und der zweite Eingriffsvorsprung an dem zweiten Verschlussteil so geformt und beschaffen sein, dass sich in belastetem Zustand der Verschlussvorrichtung eine Verstärkung des Eingriffs ergibt. Beispielsweise können an dem ersten Verschlussteil und dem zweiten Verschlussteil jeweils zwei Eingriffsvorsprünge vorgesehen sein, die sich unter einem (spitzen) Winkel zueinander erstrecken, so dass sich eine V-Form ergibt. Die Spitze des Vs weist hierbei in die Eingriffsrichtung, die vorzugsweise auch einer Belastungsrichtung entspricht, so dass im belasteten Zustand der Halt der Eingriffsvorsprünge des ersten Verschlussteils in den Eingriffsvorsprüngen des zweiten Verschlussteils verstärkt ist.

In einer Ausgestaltung weist das erste Verschlussteil ein erstes elektrisches Kontaktelement auf, und das zweite Verschlussteil weist ein zweites elektrisches Kontaktelement auf. In der Schließstellung sind das erste elektrische Kontaktelement und das zweite elektrische Kontaktelement elektrisch kontaktierend miteinander in Wirkverbindung. Über die Verschlussvorrichtung kann somit, bei mechanischem Halt zweier Baugruppen aneinander, eine elektrische Kontaktierung hergestellt werden. Die Verschlussvorrichtung ermöglicht somit in einfacher Weise ein Ansetzen von Baugruppen aneinander, bei einfachem, magnetisch unterstütztem Schließvorgang und bei zudem mechanisch festem Halt in der Schließstellung. Durch das Schließen der Verschlussvorrichtung wird gleichzeitig auch eine elektrische Kontaktierung von Kontaktelementen bewirkt, sodass in der Schließstellung die Verschlussteile der Verschlussvorrichtung auch elektrisch aneinander angeschlossen sind.

Um in der Schließstellung der Verschlussvorrichtung ein ungewünschtes Lösen der Verschlussteile voneinander auszuschließen, ist in einer Ausgestaltung zusätzlich ein Sperrelement vorgesehen, das beispielsweise als eine an einem Grundkörper eines der Verschlussteile angeordnete elastische Federzunge oder als ein federnd an dem Grundkörper angeordnetes, zum Beispiel schwenkbares Sperrteil ausgebildet ist. Das Sperrelement weicht beim Ansetzen des ersten Verschlussteils an das zweite Verschlussteil derart aus, dass der erste Eingriffsvorsprung des ersten Verschlussteils in die Eingriffsrichtung in Eingriff mit dem zweiten Eingriffsvorsprung des zweiten Verschlussteils geschoben werden kann. Beim Ansetzen wird das Sperrelement somit derart beiseite gedrängt, dass der erste Eingriffsvorsprung in Eingriff mit dem zweiten Eingriffsvorsprung geführt werden kann. Bei oder nach Herstellung des Eingriffs gelangt das Sperrelement zurück in seine Grundstellung und sperrt in dieser Grundstellung den formschlüssigen Eingriff des ersten Eingriffsvorsprungs mit dem zweiten Eingriffsvorsprung entgegen der Eingriffsrichtung. Der Halt des ersten Eingriffsvorsprungs an dem zweiten Eingriffsvorsprung und somit des ersten Verschlussteils an dem zweiten Verschlussteil ist damit gesichert, so dass die Verschlussvorrichtung nicht in unbeabsichtigter Weise geöffnet werden kann.

Das Sperrelement kann so ausgestaltet sein, dass es beim Herstellen des Eingriffs oder erst nach dem Herstellen des Eingriffs zwischen dem ersten Eingriffsvorsprung und dem zweiten Eingriffsvorsprung wieder zurück in seine Grundstellung gelangt. Das Sperrelement kann beispielsweise zurück in seine Grundstellung schnappen, sobald der Eingriff hergestellt ist (also nach Eingriffsherstellung). Möglich ist aber auch, dass bereits bei Eingriffsherstellung das Sperrelement aufgrund seiner elastischen Ausgestaltung eine Vorspannung auf das andere Verschlussteil bewirkt, die den ersten Eingriffsvorsprung in die Eingriffsrichtung in Eingriff mit dem zweiten Eingriffsvorsprung drückt und somit das Ineingriffbringen beim Herstellen des Eingriffs bereits unterstützt.

Das Sperrelement kann zum Beispiel schwenkbar an dem zugeordneten Verschlussteil angeordnet sein. Das Sperrelement kann hierbei in Richtung seiner Grundstellung federbelastet sein, sodass nach Auslenkung beim Ansetzen das Sperrelement selbsttätig zurück in seine Grundstellung gelangt, wenn die Verschlussteile in der Schließstellung sind oder sich ihrer Schließstellung nähern.

In der Schließstellung steht der erste Eingriffsvorsprung des ersten Verschlussteils formschlüssig in Eingriff mit dem zweiten Eingriffsvorsprung des zweiten Verschlussteils. Dieser Eingriff ist dabei durch das Sperrelement gesperrt, indem das Sperrelement ein Bewegen der Verschlussteile zueinander entgegen der Eingriffsrichtung verhindert, so dass die Eingriffsvorsprünge nicht entgegen der Eingriffsrichtung außer Eingriff voneinander gebracht werden können. Zum Öffnen der Verschlussvorrichtung kann die Sperrung aufgehoben werden, zum Beispiel indem das Sperrelement wiederum aus seiner Grundstellung ausgelenkt wird, beispielsweise durch händische Betätigung. Ist die Sperrung des formschlüssigen Eingriffs zwischen den Eingriffsvorsprüngen des ersten Verschlussteils und des zweiten Verschlussteils aufgehoben, können die Eingriffsvorsprünge entgegen der Eingriffsrichtung außer Eingriff voneinander gebracht werden, sodass die Verschlussteile voneinander gelöst werden können.

Grundsätzlich wirkt die magnetische Einrichtung magnetisch anziehend in die Schließrichtung, die beispielsweise in etwa senkrecht zur Eingriffsrichtung gerichtet sein kann. Aufgrund der Wirkung der magnetischen Einrichtung werden die Verschlussteile beim Ansetzen in die Schließrichtung somit gegenseitig angezogen, wobei die Kraftwirkung zwischen den magnetischen Mitteln derart ist, dass der erste Eingriffsvorsprung des ersten Verschlussteils in magnetisch unterstützter Weise in Eingriff mit dem zweiten Eingriffsvorsprung des zweiten Verschlussteils gebracht wird und somit das Schließen der Verschlussvorrichtung in magnetisch unterstützter Weise weitestgehend selbsttätig erfolgen kann.

Beispielsweise kann an jedem Verschlussteil je ein Paar von zwei Magnetelementen vorgesehen sein, die entlang der Eingriffsrichtung zueinander versetzt sind. Auf diese Weise kann einem Verkippen der Verschlussteile zueinander beim Schließen der Verschlussvorrichtung entgegengewirkt werden. Zudem kann eine vorteilhafte Kraftwirkung in Richtung eines Eingriffs der Eingriffsvorsprünge ineinander erzielt werden.

Die Magnetelemente können durch Permanentmagnetelemente ausgestaltet sein, wobei sich die Magnetelemente der Verschlussteile in diesem Fall mit ungleichnamigen Magnetpolen gegenüberstehen und somit magnetisch anziehend zusammenwirken. Denkbar und möglich ist aber auch, dass die Magnetelemente einerseits durch Permanentmagnetelemente und andererseits zum Beispiel durch ferromagnetische Elemente (magnetische Anker) ausgebildet sind, die sich gegenüberstehen und zusammenwirken, sodass eine magnetische Anziehungskraft zwischen den Verschlussteilen besteht.

In einer Ausgestaltung weist eins der Verschlussteile ein Führungselement zum Beispiel in Form eines von einem Grundkörper vorstehenden Vorsprungs auf, der beim Ansetzen der Verschlussteile mit einer Führungsöffnung des anderen Verschlussteils in Eingriff gelangt. Über das Führungselement und dessen Eingriff in die zugeordnete Führungsöffnung des anderen Verschlussteils wird somit eine Führung der Verschlussteile aneinander bereitgestellt, insbesondere entlang der Eingriffsrichtung, in die die Eingriffsvorsprünge der Verschlussteile beim Ansetzen der Verschlussteile miteinander in Eingriff zu bringen sind.

In einer weiteren Ausgestaltung kann jedes Verschlussteil einen Grundkörper aufweisen, der aus zwei Teilkörpern zusammengesetzt ist. Die Teilkörper können hierbei aus unterschiedlichen Materialien gefertigt sein, zum Beispiel aus unterschiedlichen Kunststoffmaterialien (zum Beispiel mit einer unterschiedlichen Härte) oder einerseits aus einem Metallmaterial und andererseits aus einem Kunststoffmaterial. Auf diese Weise kann zum Beispiel ein innerer Teilkörper aus einem elektrisch isolierenden Material zum elektrischen Isolieren des an dem jeweiligen Verschlussteil angeordneten Kontaktelements gefertigt sein, während ein äußerer Teilkörper zum Beispiel aus einem Metallmaterial zum Bereitstellen eines belastbaren, stoßfesten Gehäuses gefertigt sein kann.

Nach einem weiteren Aspekt umfasst eine Verschlussvorrichtung zum lösbaren Verbinden zweier Teile
- ein erstes Verschlussteil,
- ein zweites Verschlussteil, wobei das erste Verschlussteil und das zweite Verschlussteil zum Schließen der Verschlussvorrichtung aneinander ansetzbar und in einer Schließstellung mechanisch miteinander verrastet sind, und
- eine zwischen dem ersten Verschlussteil und dem zweiten Verschlussteil wirkende magnetische Einrichtung, die ausgebildet ist, das Ansetzen des ersten Verschlussteils und des zweiten Verschlussteils aneinander durch Bereitstellen einer magnetischen Anziehungskraft zu unterstützen,
dadurch gekennzeichnet, dass das erste Verschlussteil zumindest ein erstes elektrisches Kontaktelement und das zweite Verschlussteil zumindest ein zweites elektrisches Kontaktelement aufweisen, wobei das zumindest eine erste elektrische Kontaktelement und das zumindest zweite elektrische Kontaktelement bei Ansetzen der Verschlussteile aneinander und/oder bei Lösen der Verschlussteile voneinander flächig aneinander schleifen und in der Schließstellung elektrisch kontaktierend miteinander in Wirkverbindung sind.

Die vorangehend beschriebenen Vorteile und vorteilhaften Ausgestaltungen finden auch auf diese Lösung Anwendung, sodass vollumfänglich auf das vorangehend Erläuterte verwiesen werden soll. Insbesondere sind die Merkmale der Unteransprüche zum Anspruch 1 auch mit dieser Lösung kombinierbar.

Der der Erfindung zugrundeliegende Gedanke soll nachfolgend anhand der in den Figuren dargestellten Ausführungsbeispiele näher erläutert werden. Es zeigen:
- Fig. 1: eine Ansicht einer Verschlussvorrichtung mit zwei Verschlussteilen;
- Fig. 2A: eine Draufsicht auf die Verschlussvorrichtung, vor dem Schließen;
- Fig. 2B: eine Schnittansicht entlang der Linie B-B gemäß Fig. 2A;
- Fig. 2C: eine Seitenansicht der Verschlussvorrichtung;
- Fig. 3A: eine Draufsicht auf die Verschlussvorrichtung beim Schließen;
- Fig. 3B: eine Schnittansicht entlang der Linie C-C gemäß Fig. 3A;
- Fig. 3C: eine Schnittansicht entlang der Linie B-B gemäß Fig. 3A;
- Fig. 3D: eine Seitenansicht der Verschlussvorrichtung;
- Fig. 4A: eine Draufsicht auf die Verschlussvorrichtung beim weiteren Schließen;
- Fig. 4B: eine Schnittansicht entlang der Linie C-C gemäß Fig. 4A;
- Fig. 4C: eine Schnittansicht entlang der Linie B-B gemäß Fig. 4A;
- Fig. 4D: eine Seitenansicht der Verschlussvorrichtung;
- Fig. 5A: eine Draufsicht auf die Verschlussvorrichtung beim weiteren Schließen;
- Fig. 5B: eine Schnittansicht entlang der Linie C-C gemäß Fig. 5A;
- Fig. 5C: eine Schnittansicht entlang der Linie B-B gemäß Fig. 5A;
- Fig. 5D: eine Seitenansicht der Verschlussvorrichtung;
- Fig. 6A: eine Draufsicht auf die Verschlussvorrichtung in einer Schließstellung;
- Fig. 6B: eine Schnittansicht entlang der Linie C-C gemäß Fig. 6A;
- Fig. 6C: eine Schnittansicht entlang der Linie B-B gemäß Fig. 6A;
- Fig. 6D: eine Seitenansicht der Verschlussvorrichtung;
- Fig. 7A: eine Draufsicht auf die Verschlussvorrichtung bei schrägem Ansetzen der Verschlussteile aneinander, vor dem Schließen;
- Fig. 7B: eine Schnittansicht entlang der Linie C-C gemäß Fig. 7A;
- Fig. 7C: eine Schnittansicht entlang der Linie B-B gemäß Fig. 7A;
- Fig. 7D: eine Seitenansicht der Verschlussvorrichtung;
- Fig. 8A: eine Draufsicht auf die Verschlussvorrichtung beim Schließen;
- Fig. 8B: eine Schnittansicht entlang der Linie C-C gemäß Fig. 8A;
- Fig. 8C: eine Schnittansicht entlang der Linie B-B gemäß Fig. 8A;
- Fig. 8D: eine Seitenansicht der Verschlussvorrichtung;
- Fig. 9A: eine Draufsicht auf die Verschlussvorrichtung beim weiteren Schließen;
- Fig. 9B: eine Schnittansicht entlang der Linie C-C gemäß Fig. 9A;
- Fig. 9C: eine Schnittansicht entlang der Linie B-B gemäß Fig. 9A;
- Fig. 9D: eine Seitenansicht der Verschlussvorrichtung;
- Fig. 10A: eine Draufsicht auf die Verschlussvorrichtung beim weiteren Schließen;
- Fig. 10B: eine Schnittansicht entlang der Linie C-C gemäß Fig. 10A;
- Fig. 10C: eine Schnittansicht entlang der Linie B-B gemäß Fig. 10A;
- Fig. 10D: eine Seitenansicht der Verschlussvorrichtung;
- Fig. 11A: eine Draufsicht auf die Verschlussvorrichtung beim weiteren Schließen;
- Fig. 11B: eine Schnittansicht entlang der Linie C-C gemäß Fig. 11A;
- Fig. 11C: eine Schnittansicht entlang der Linie B-B gemäß Fig. 11A;
- Fig. 11D: eine Seitenansicht der Verschlussvorrichtung;
- Fig. 12A: eine Draufsicht auf die Verschlussvorrichtung in der Schließstellung;
- Fig. 12B: eine Schnittansicht entlang der Linie C-C gemäß Fig. 12A;
- Fig. 12C: eine Schnittansicht entlang der Linie B-B gemäß Fig. 12A;
- Fig. 12D: eine Seitenansicht der Verschlussvorrichtung;
- Fig. 13A: eine Draufsicht auf die Verschlussvorrichtung, bei schrägem Ansetzen der Verschlussteile aneinander, vor dem Schließen;
- Fig. 13B: eine Schnittansicht entlang der Linie C-C gemäß Fig. 13A;
- Fig. 13C: eine Schnittansicht entlang der Linie B-B gemäß Fig. 13A;
- Fig. 13D: eine Seitenansicht der Verschlussvorrichtung;
- Fig. 14A: eine Draufsicht auf die Verschlussvorrichtung beim weiteren Schließen;
- Fig. 14B: eine Schnittansicht entlang der Linie C-C gemäß Fig. 14A;
- Fig. 14C: eine Schnittansicht entlang der Linie B-B gemäß Fig. 14A;
- Fig. 14D: eine Seitenansicht der Verschlussvorrichtung;
- Fig. 15A: eine Draufsicht auf die Verschlussvorrichtung beim weiteren Schließen;
- Fig. 15B: eine Schnittansicht entlang der Linie C-C gemäß Fig. 15A;
- Fig. 15C: eine Schnittansicht entlang der Linie B-B gemäß Fig. 15A;
- Fig. 15D: eine Seitenansicht der Verschlussvorrichtung;
- Fig. 16A: eine Draufsicht auf die Verschlussvorrichtung beim weiteren Schließen;
- Fig. 16B: eine Schnittansicht entlang der Linie C-C gemäß Fig. 16A;
- Fig. 16C: eine Schnittansicht entlang der Linie B-B gemäß Fig. 16A;
- Fig. 16D: eine Seitenansicht der Verschlussvorrichtung;
- Fig. 17A: eine Draufsicht auf die Verschlussvorrichtung in der Schließstellung;
- Fig. 17B: eine Schnittansicht entlang der Linie C-C gemäß Fig. 17A;
- Fig. 17C: eine Schnittansicht entlang der Linie B, B gemäß Fig. 17A;
- Fig. 17D: eine Seitenansicht der Verschlussvorrichtung;
- Fig. 18A: eine Ansicht eines Ausführungsbeispiels einer Verschlussvorrichtung an einer Halterung für ein Fahrrad;
- Fig. 18B: eine Draufsicht auf die Halterung;
- Fig. 18C: eine Schnittansicht entlang der Linie A-A gemäß Fig. 18B;
- Fig. 19A: eine Ansicht der Verschlussvorrichtung an der Halterung, beim Öffnen;
- Fig. 19B: eine Draufsicht auf die Halterung;
- Fig. 19C: Eine Schnittansicht entlang der Linie A-A gemäß Fig. 19B;
- Fig. 20A: eine Ansicht der Verschlussvorrichtung an der Halterung, beim weiteren Öffnen;
- Fig. 20B: eine Draufsicht auf die Halterung;
- Fig. 20C: eine Schnittansicht entlang der Linie A-A gemäß Fig. 20B;
- Fig. 21A: eine Ansicht der Verschlussvorrichtung in geöffneter Stellung an der Halterung;
- Fig. 21B: eine Draufsicht auf die Halterung;
- Fig. 21C: eine Schnittansicht entlang der Linie A-A gemäß Fig. 21B;
- Fig. 22A: eine Draufsicht auf die Verschlussvorrichtung des Ausführungsbeispiels gemäß Fig. 18A-18C bis 21A-21C, beim Schließen der Verschlussvorrichtung;
- Fig. 22B: eine Seitenansicht der Verschlussvorrichtung;
- Fig. 22C: eine Schnittansicht entlang der Linie A-A gemäß Fig. 22A;
- Fig. 22D: eine vergrößerte Ansicht im Ausschnitt B gemäß Fig. 22C;
- Fig. 23A: eine Draufsicht auf die Verschlussvorrichtung, beim weiteren Schließen;
- Fig. 23B: eine Seitenansicht der Verschlussvorrichtung;
- Fig. 23C: eine Schnittansicht entlang der Linie A-A gemäß Fig. 23A;
- Fig. 23D: eine vergrößerte Ansicht im Ausschnitt B gemäß Fig. 23C;
- Fig. 24A: eine Draufsicht auf die Verschlussvorrichtung beim weiteren Schließen;
- Fig. 24B: eine Seitenansicht der Verschlussvorrichtung;
- Fig. 24C: eine Schnittansicht entlang der Linie A-A gemäß Fig. 24A;
- Fig. 24D: eine vergrößerte Ansicht im Ausschnitt B gemäß Fig. 24C;
- Fig. 25A: eine Draufsicht auf die Verschlussvorrichtung beim weiteren Schließen;
- Fig. 25B: eine Seitenansicht der Verschlussvorrichtung;
- Fig. 25C: eine Schnittansicht entlang der Linie A-A gemäß Fig. 25A;
- Fig. 25D: eine vergrößerte Ansicht im Ausschnitt B gemäß Fig. 25C;
- Fig. 26A: eine Draufsicht auf die Verschlussvorrichtung beim weiteren Schließen;
- Fig. 26B: eine Seitenansicht der Verschlussvorrichtung;
- Fig. 26C: eine Schnittansicht entlang der Linie A-A gemäß Fig. 26A;
- Fig. 26D: eine vergrößerte Ansicht im Ausschnitt B gemäß Fig. 26C;
- Fig. 27A: eine Draufsicht auf die Verschlussvorrichtung in der Schließstellung;
- Fig. 27B: eine Seitenansicht der Verschlussvorrichtung;
- Fig. 27C: eine Schnittansicht entlang der Linie A-A gemäß Fig. 27A;
- Fig. 27D: eine vergrößerte Ansicht im Ausschnitt B gemäß Fig. 27C;
- Fig. 28A: eine Ansicht eines Fahrrads mit einer daran angeordneten Verschlussvorrichtung zum Anbringen eines Rücklichts, bei geöffneter Verschlussvorrichtung;
- Fig. 28B: eine vergrößerte Ansicht im Ausschnitt A gemäß Fig. 28A;
- Fig. 28C: eine Ansicht des Fahrrads von hinten;
- Fig. 28D: eine vergrößerte Schnittansicht entlang der Linie D-D gemäß Fig. 28C;
- Fig. 29A: eine Ansicht des Fahrrads, beim Schließen der Verschlussvorrichtung;
- Fig. 29B: eine vergrößerte Ansicht im Ausschnitt A gemäß Fig. 29A, beim Schließen der Verschlussvorrichtung;
- Fig. 29C: eine Ansicht des Fahrrads von hinten;
- Fig. 29D: eine Schnittansicht entlang der Linie D-D gemäß Fig. 29C;
- Fig. 30A: eine Ansicht des Fahrrads, beim weiteren Schließen der Verschlussvorrichtung;
- Fig. 30B: eine vergrößerte Ansicht im Ausschnitt A gemäß Fig. 30A;
- Fig. 30C: eine Ansicht des Fahrrads von hinten;
- Fig. 30D: eine Schnittansicht entlang der Linie D-D gemäß Fig. 30C;
- Fig. 31A: eine Explosionsansicht der Verschlussvorrichtung gemäß Fig. 1;
- Fig. 31B: eine andere Explosionsansicht der Verschlussvorrichtung;
- Fig. 32A: eine Ansicht der Verschlussvorrichtung, mit getrennten Teilkörpern der Verschlussteile;
- Fig. 32B: eine andere Ansicht der Verschlussvorrichtung, mit getrennten Teilkörpern der Verschlussteile;
- Fig. 33A: eine Ansicht der Verschlussvorrichtung vor dem Schließen;
- Fig. 33B: eine andere Ansicht der Verschlussvorrichtung vor dem Schließen;
- Fig. 34A: eine Ansicht der Verschlussvorrichtung in der Schließstellung; und
- Fig. 34B: eine andere Ansicht der Verschlussvorrichtung in der Schließstellung.

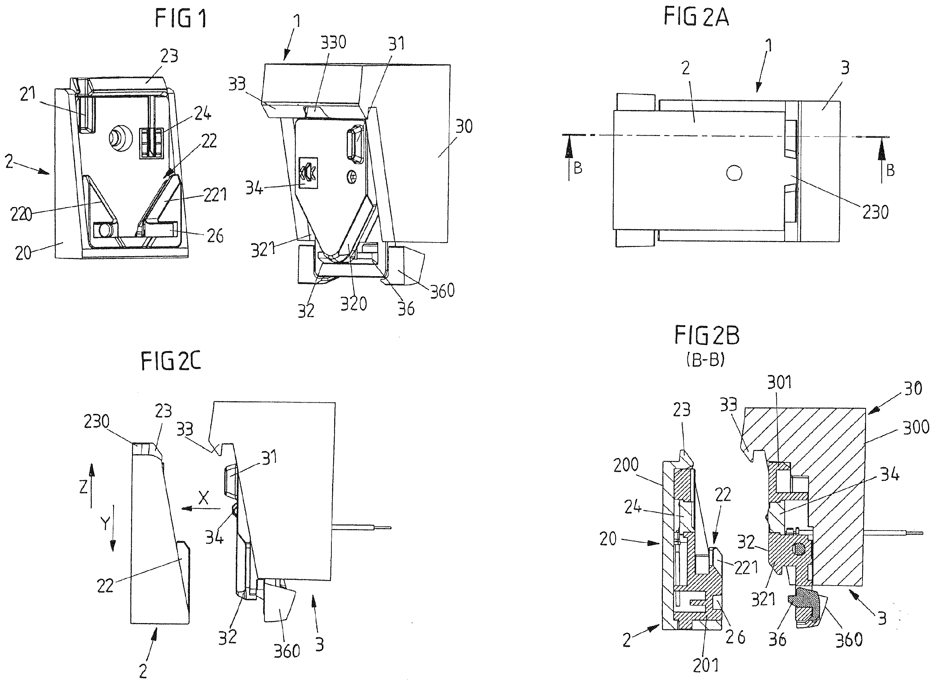

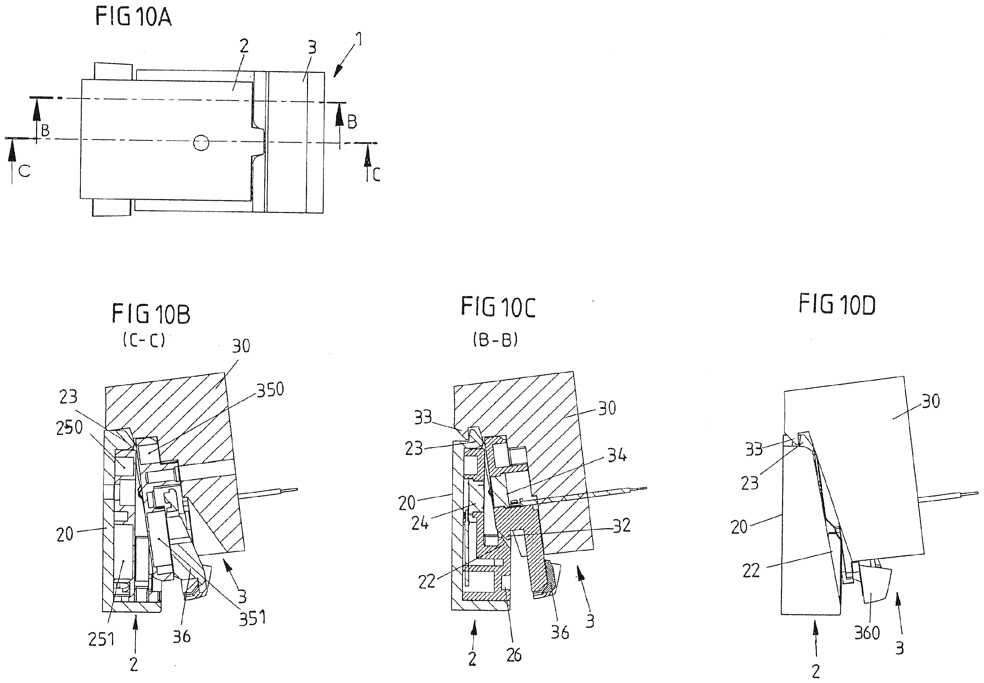

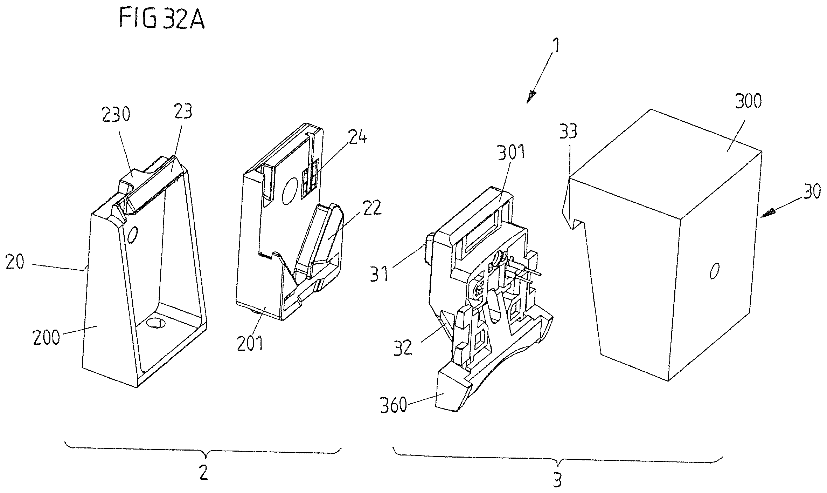

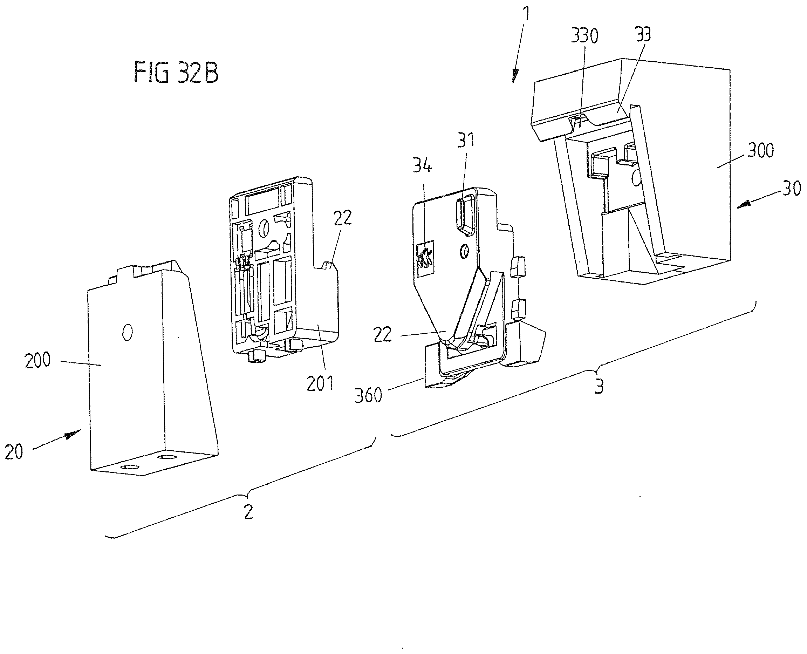

Fig. 1 bis 17A-17D sowie Fig. 31A, 31B bis 34A, 34B zeigen ein Ausführungsbeispiel einer Verschlussvorrichtung 1, die zwei Verschlussteile 2, 3 aufweist und zum lösbaren Verbinden zweier Teile miteinander dient.

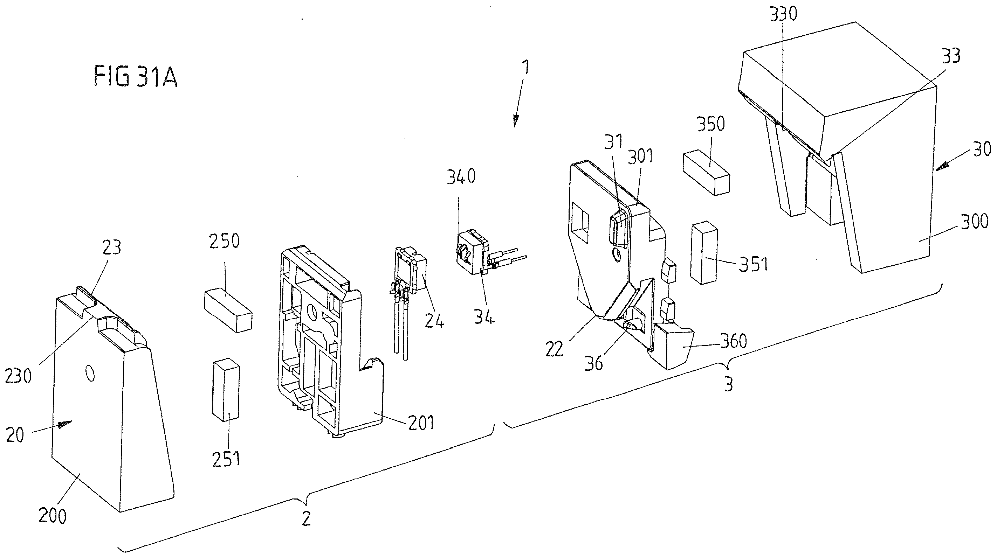

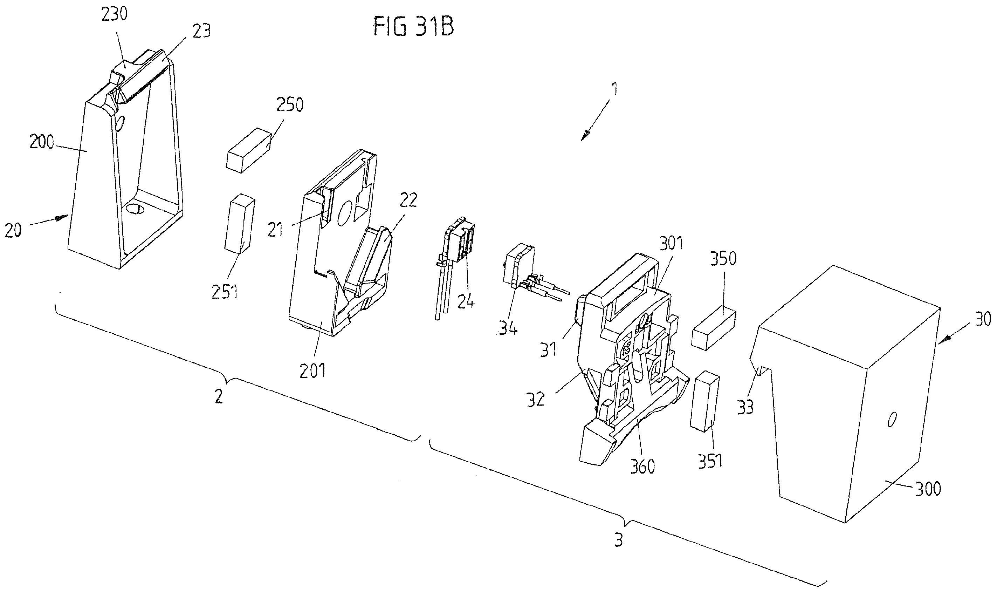

Wie aus den Explosionsansichten gemäß Fig. 31A, 31B ersichtlich, weist jedes Verschlussteil 2, 3 einen Grundkörper 20, 30 auf, der aus zwei Teilkörpern 200, 201, 300, 301 zusammengesetzt ist, die aus unterschiedlichen Materialien gefertigt sein können. Beispielsweise können die Teilkörper 200, 201, 300, 301 aus unterschiedlichen Kunststoffmaterialien oder einerseits aus einem Kunststoffmaterial und andererseits aus einem Metallmaterial gefertigt sein.

An den Grundkörpern 20, 30 ist jeweils einer Eingriffseinrichtung 22, 32 angeordnet, die jeweils an dem innenliegenden Teilkörper 201, 301 geformt ist und durch zwei unter einem Winkel zueinander angeordneten, eine V-Form ausbildenden Eingriffsvorsprünge 220, 221, 320, 321 (siehe Fig. 1) gebildet ist.

Während die Eingriffseinrichtung 22 des einen Verschlussteils 2 als Vertiefung ausgebildet ist, ist die Eingriffseinrichtung 32 des anderen Verschlussteils 3 als erhabener Abschnitt ausgebildet, der in die Vertiefung der anderen Eingriffseinrichtung 22 eingesetzt werden kann. Zum Schließen der Verschlussvorrichtung 1 können die Eingriffseinrichtungen 22, 32 aneinander angesetzt werden, sodass in einer Schließstellung die Eingriffsvorsprünge 220, 221, 320, 321 formschlüssig miteinander in Eingriff stehen und darüber die Verschlussteile 2, 3 mechanisch miteinander verbunden sind.

Die Eingriffsvorsprünge 220, 221, 320, 321 sind bei dem dargestellten Ausführungsbeispiel als starre Abschnitte an den innenliegenden Teilkörpern 201, 301 der Grundkörper 20, 30 der Verschlussteile 2, 3 gebildet. Versetzt zu den Eingriffseinrichtungen 22, 32 ist an jedem Verschlussteil 2, 3 (betrachtet entlang einer Eingriffsrichtung Y, entlang derer die Eingriffseinrichtungen 22, 32 formschlüssig miteinander in Eingriff gebracht werden können) ein weiterer, zusätzlicher Eingriffsvorsprung 23, 33 angeordnet, der an dem äußeren Teilkörper 200, 300 des zugeordneten Grundkörpers 20, 30 geformt ist und geradlinig und quer zur Eingriffsrichtung Y erstreckt ist. Sowohl die Eingriffsvorsprünge 220, 221, 320, 321 der Eingriffseinrichtungen 22, 32 als auch die zusätzlichen Eingriffsvorsprünge 23, 33 sind als Hinterschnitte ausgebildet und stehen paarweise miteinander in Eingriff, wenn die Verschlussteile 2, 3 in einer Schließstellung der Verschlussvorrichtung 1 aneinander angesetzt sind, sodass die Verschlussteile 2, 3 entgegen einer Schließrichtung X mechanisch aneinander gehalten sind.

An jedem Grundkörper 20, 30 ist ein Paar von Magnetelementen 250, 251, 350, 351 angeordnet, die sich mit ungleichnamigen Magnetpolen gegenüberstehen und somit eine magnetische Anziehungskraft zwischen den Verschlussteilen 2, 3 bewirken. Durch die Magnetelemente 250, 251, 350, 351 wird das Ansetzen der Verschlussteile 2, 3 magnetisch unterstützt, sodass die Verbindung zwischen den Verschlussteilen 2, 3 zumindest weitestgehend selbsttätig hergestellt wird.

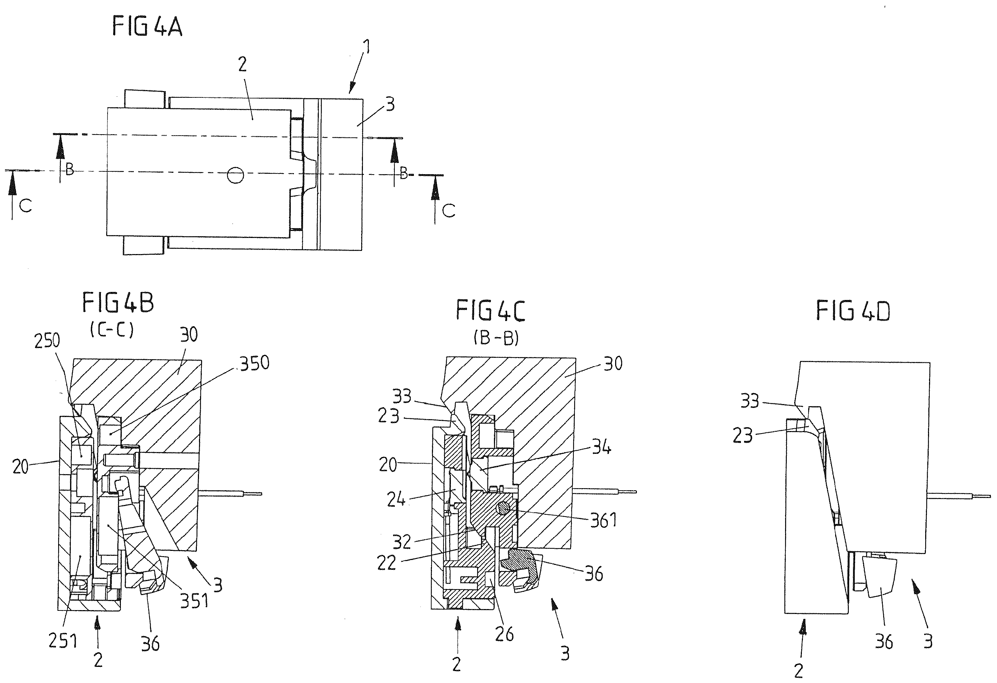

An dem Verschlussteil 3 ist zudem ein Sperrelement 36 in Form eines um eine Schwenkachse 361 schwenkbaren Hebelelements (siehe zum Beispiel Fig. 4C) angeordnet, das aus einer Grundstellung heraus auslenkbar ist und dazu dient, die Verschlussteile 2, 3 in ihrer Schließstellung zueinander zu sichern, sodass der Eingriff zwischen den Eingriffsvorsprüngen 220, 221, 320, 321, 23, 33 gesichert ist und nicht ohne weiteres, jedenfalls nicht ohne Aufheben der Sperrung durch das Sperrelement 36, gelöst werden kann. In der Schließstellung greift das Sperrelement 36 in eine Sperröffnung 26 auf Seiten des anderen Verschlussteils 2 ein, sodass auf diese Weise die Verschlussteile 2, 3 entgegen der Eingriffsrichtung Y zueinander gesichert sind.

An einer dem jeweils anderen Verschlussteil 2, 3 zugewandten Seite des innenliegenden Teilkörpers 201, 301 ist jeweils ein elektrisches Kontaktelement 24, 34 angeordnet, das zum Herstellen einer elektrischen Kontaktierung zwischen den Verschlussteilen 2, 3 in der Schließstellung der Verschlussvorrichtung 1 dient. In der Schließstellung sind die Kontaktelemente 24, 34 elektrisch kontaktierend miteinander in Anlage, sodass über die Kontaktelemente 24, 34 ein Strom fließen kann.

Fig. 2A-2C bis Fig. 6A-6D zeigen die Verschlussvorrichtung 1 beim Schließen, also beim Ansetzen der Verschlussteile 2, 3 aneinander zum Schließen der Verschlussvorrichtung 1.

Zum Schließen der Verschlussvorrichtung 1 können die Verschlussteile 2, 3 in eine Schließrichtung X aneinander angesetzt werden. Beim Ansetzen wirken die Magnetelemente 250, 251, 350, 351 der Verschlussteile 2, 3 magnetisch anziehend zusammen, sodass bei Annähern die Verschlussteile 2, 3 magnetisch zueinander hingezogen werden.

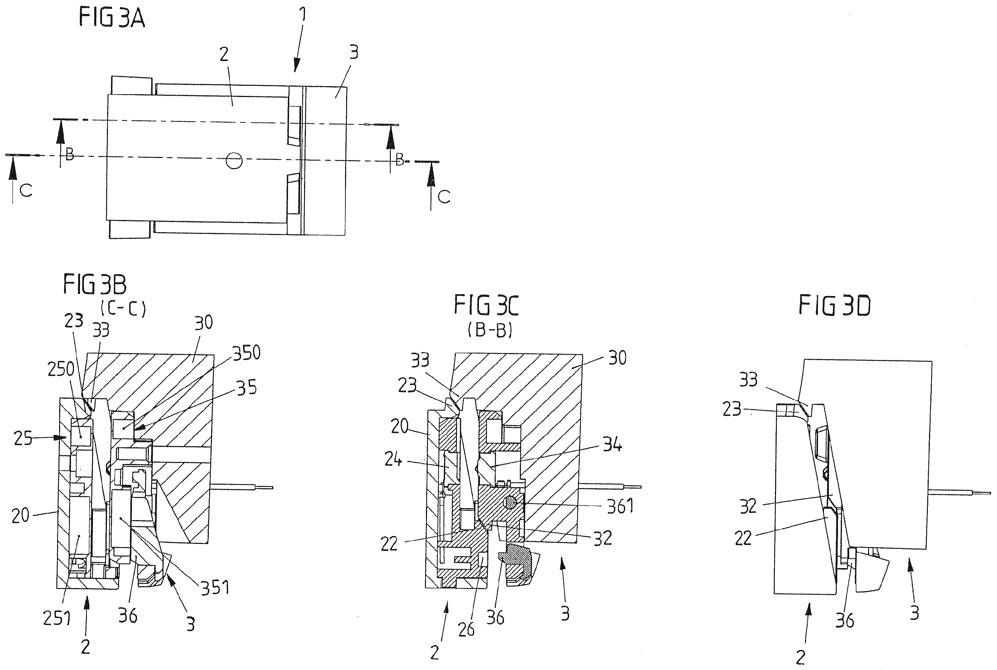

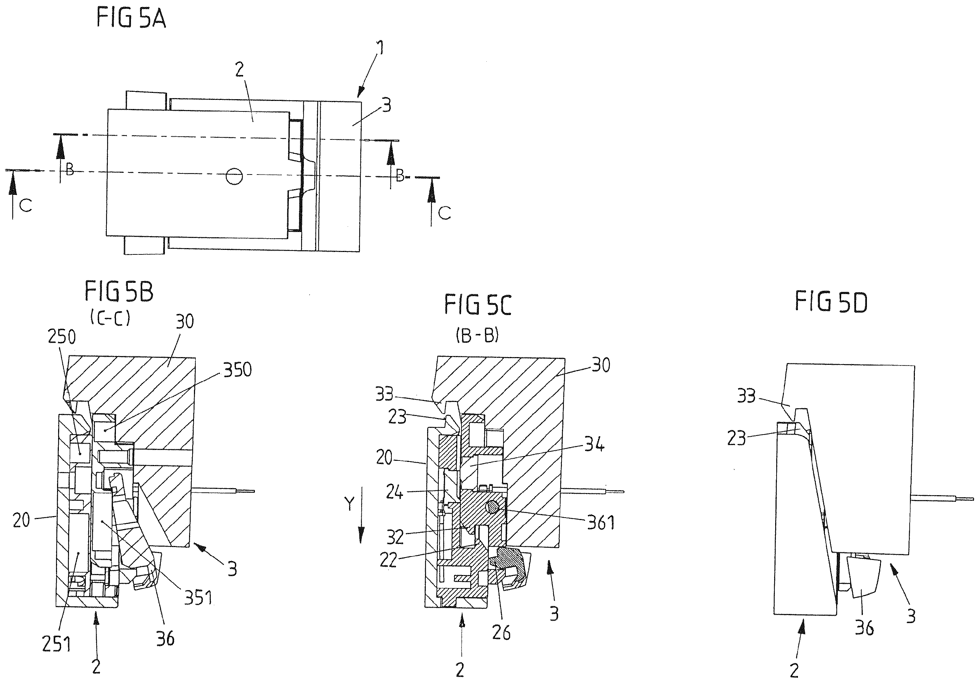

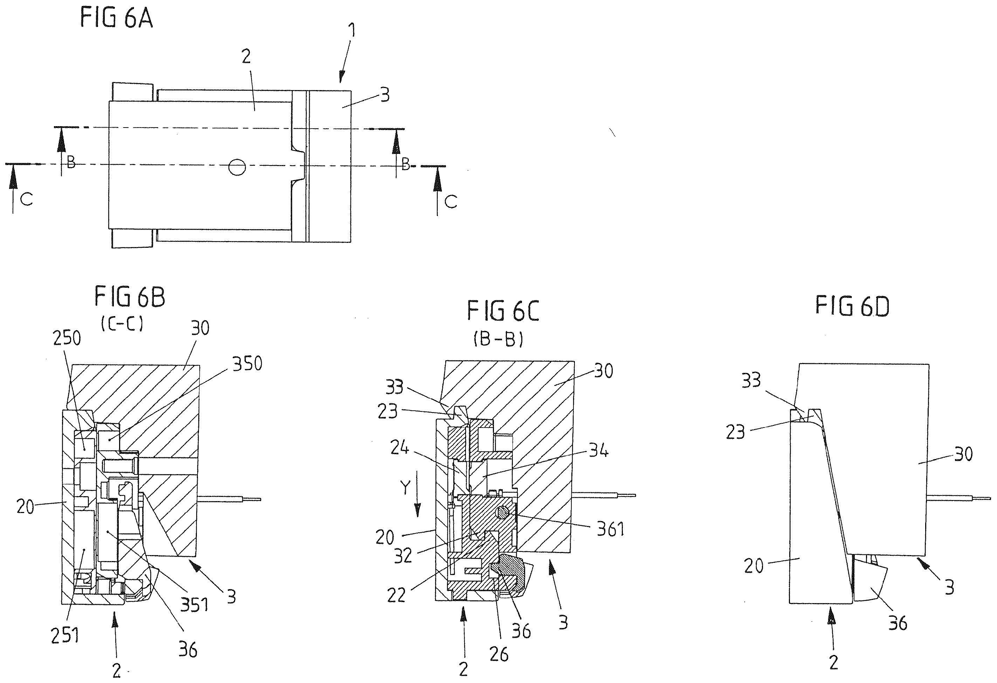

Erfolgt das Ansetzen, wie in der Abfolge von Fig. 2A-2C hin zu Fig. 6A-6D gezeigt, planparallel, so gelangen die Eingriffsvorsprünge 220, 221, 320, 321, 23, 33 mit einander in Anlage und laufen aufeinander auf, wie dies im Übergang von Fig. 3C hin zu Fig. 4C dargestellt ist, aufgrund von Auflaufschrägen, die an den Eingriffsvorsprüngen 220, 221, 320, 321, 23, 33 gebildet sind. Durch Auflaufen der Eingriffsvorsprünge 220, 221, 320, 321, 23, 33 aufeinander bewegen sich die Eingriffsvorsprünge 220, 221, 320, 321, 23, 33 aneinander vorbei und gelangen, wie dies im Übergang von Fig. 5C zu Fig. 6C dargestellt ist, in die Eingriffsrichtung Y formschlüssig miteinander in Eingriff.

Die Magnetelemente 250, 251, 350, 351 sind derart an den Grundkörpern 20, 30 der Verschlussteile 2, 3 angeordnet, dass die Magnetelemente 250, 251, 350, 351 in der Schließstellung zu einander versetzt sind und beim Schließen wie auch in der Schließstellung eine magnetische Anziehungskraft (auch) in Richtung der Schließstellung, also in Richtung eines Eingriffs der Eingriffsvorsprünge 220, 221, 320, 321, 23, 33 miteinander, bewirken. So ist aus Fig. 6B ersichtlich, dass in der Schließstellung die Magnetelemente 250, 251, 350, 351 (geringfügig) entlang der Eingriffsrichtung Y zueinander versetzt sind derart, dass die magnetische Anziehung zwischen den Magnetelementen 250, 251, 350, 351 zumindest mit einer Richtungskomponente auch in die Eingriffsrichtung Y wirkt und somit die Verschlussteile 2, 3 in die Eingriffsrichtung Y miteinander in Eingriff gezogen werden. Der formschlüssige Eingriff zwischen den Verschlussteilen 2, 3 wird somit bei Ansetzen der Verschlussteile 2, 3 aneinander in magnetisch unterstützter Weise, vorzugsweise selbsttätig, hergestellt.

Beim Ansetzen der Verschlussteile 2, 3 aneinander wird das an dem Verschlussteil 3 schwenkbar angeordnete Sperrelement 36 aus seiner Grundstellung heraus ausgelenkt, wie dies aus Fig. 4C und 5C ersichtlich ist, aufgrund einer Wechselwirkung des Verschlussteils 2 mit dem Sperrelement 36. Das Auslenken des Sperrelements 36 aus der Grundstellung heraus erfolgt hierbei entgegen einer vorspannenden Wirkung eines Federelements 37, wie dies aus Fig. 4B ersichtlich ist, sodass eine federmechanische Spannung auf das Sperrelement 36 in Richtung der Grundstellung wirkt. Entsprechend wird das Sperrelement 36 bei Erreichen der Schließstellung der Verschlussteile 2, 3 in die Grundstellung zurückgestellt und gelangt in Eingriff mit der Sperröffnung 26 an dem Verschlussteil 2, wie dies aus Fig. 6C ersichtlich ist.

Durch den Eingriff des Sperrelements 36 in die Sperröffnung 26 ist die Stellung der Verschlussteile 2, 3 entlang der Eingriffsrichtung Y zueinander gesichert. Aufgrund des Eingriffs des Sperrelements 36 in die Sperröffnung 26 können insbesondere die Eingriffsvorsprünge 220, 221, 320, 321, 23, 33 nicht entgegen der Eingriffsrichtung Y außer Eingriff gelangen, sodass der Formschluss zwischen den Verschlussteilen 2, 3 gesichert ist.

Das Sperrelement 36 ist an den Verschlussteilen 3 in unmittelbarer Nachbarschaft zu der Eingriffseinrichtung 32 angeordnet, sodass der Formschluss zwischen den Verschlussteilen 2, 3 dort gesichert ist, wo der formschlüssige Eingriff besteht. Dies verbessert den mechanischen Halt der Verschlussteile 2, 3 aneinander.

Wie aus der Abfolge von Fig. 4C hin zu Fig. 6C ersichtlich, gleiten die Kontaktelemente 24, 34 übereinander, wenn die Verschlussteile 2, 3 in die Eingriffsrichtung Y miteinander in Eingriff gebracht werden. Hierdurch schleifen die Kontaktelemente 24, 34 übereinander, was bewirken kann, dass die Kontaktelemente 24, 34 von eventuellem Schmutz oder einer eventuell vorhanden Oxidschicht befreit werden und somit eine zuverlässige Herstellung einer elektrischen Kontaktierung begünstigt ist.

In der Schließstellung sind die Kontaktelemente 24, 34 elektrisch kontaktierend miteinander in Anlage, wie dies aus Fig. 6C ersichtlich ist, sodass ein Strom zwischen den Verschlussteilen 2, 3 fließen kann.

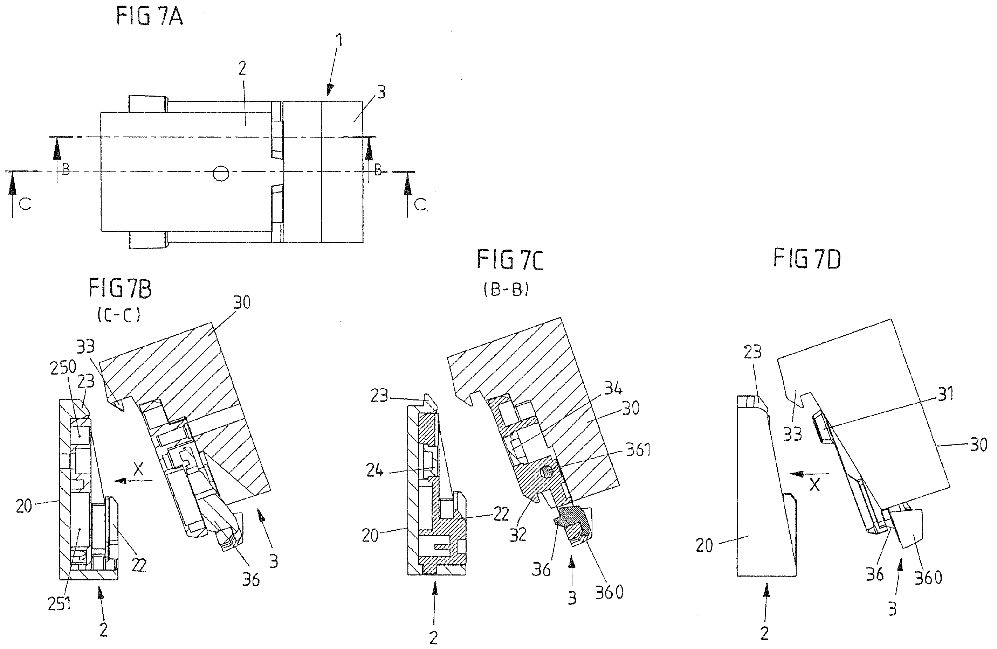

Fig. 7A-7D bis 12A-12D sowie Fig. 13A-13D bis 17A-17D zeigen das Schließen der Verschlussvorrichtung 1 bei schrägem Ansetzen der Verschlussteile 2, 3 aneinander (wobei die Neigungsrichtung des Verschlussteils 3 gegenüber dem Verschlussteil 2 in den Sequenzen der Figuren zueinander umgekehrt ist).

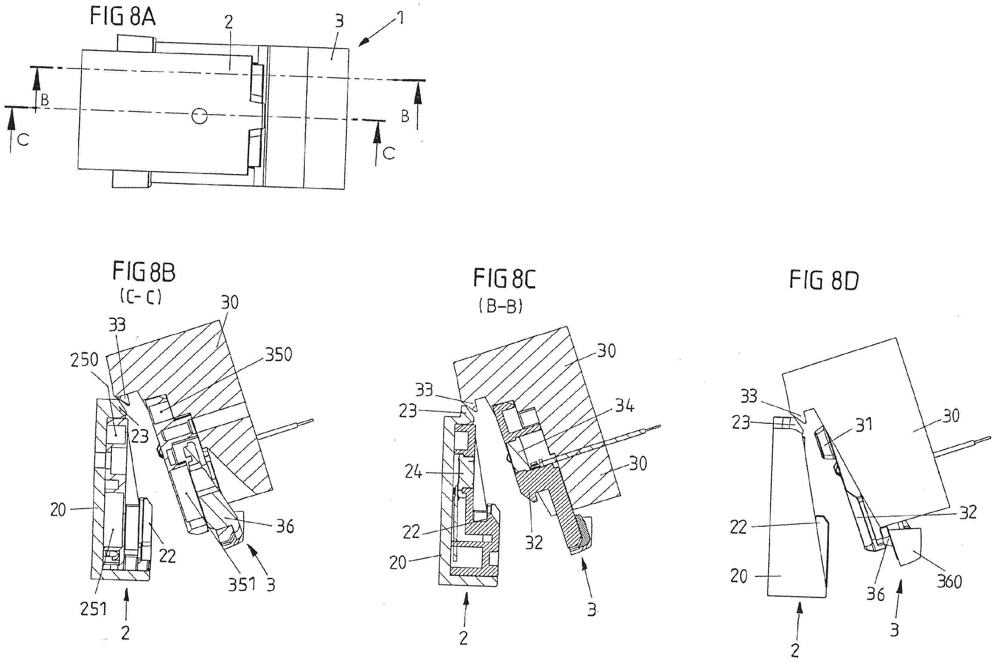

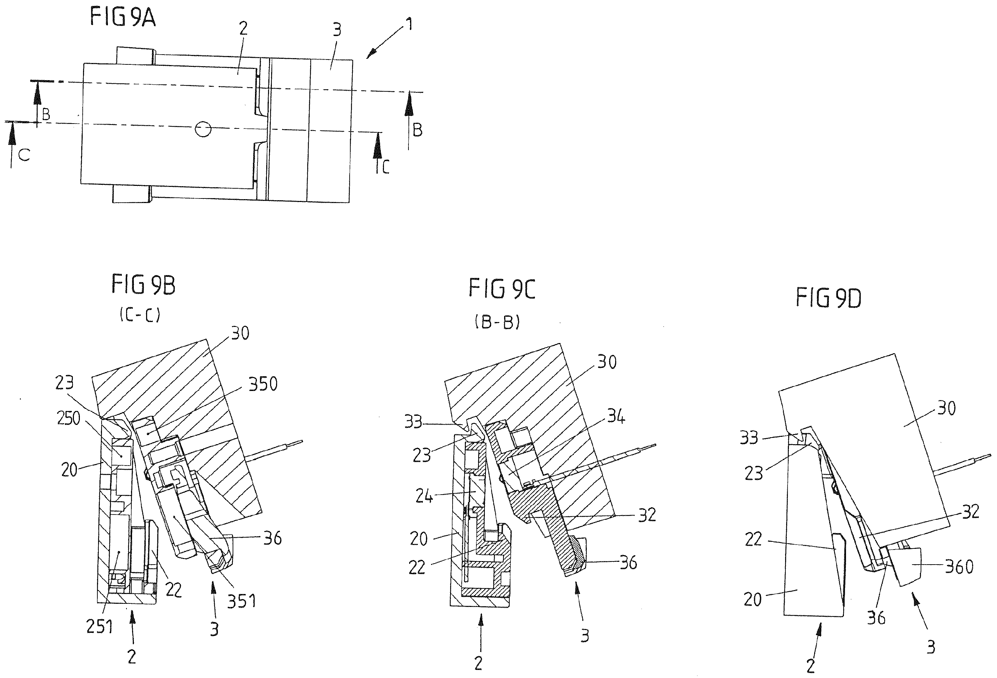

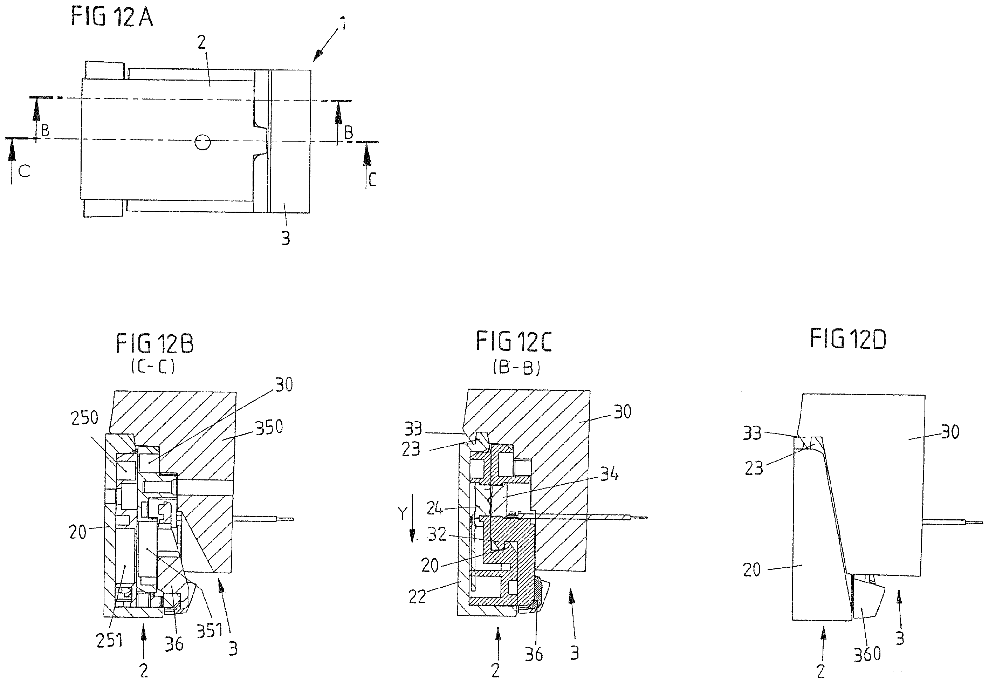

Wird das Verschlussteil 3 schräg wie in Fig. 7A-7D und 8A-8D an das Verschlussteil 2 angesetzt, so gelangen zunächst die Eingriffsvorsprünge 23, 33 miteinander in Anlage und in Eingriff, wie dies aus Fig. 9C ersichtlich ist. Durch Verkippen des Verschlussteils 3 gegenüber dem Verschlussteil 2 gelangen dann auch die Eingriffsvorsprünge 220, 221, 320, 321, unterstützt durch die magnetische Wechselwirkung zwischen den Magnetelemente 250, 251, 350, 351, miteinander in Anlage und in Eingriff, sodass in der Schließstellung (Fig. 12A-12D) die Verschlussteile 2, 3 wiederum formschlüssig miteinander in Eingriff sind.

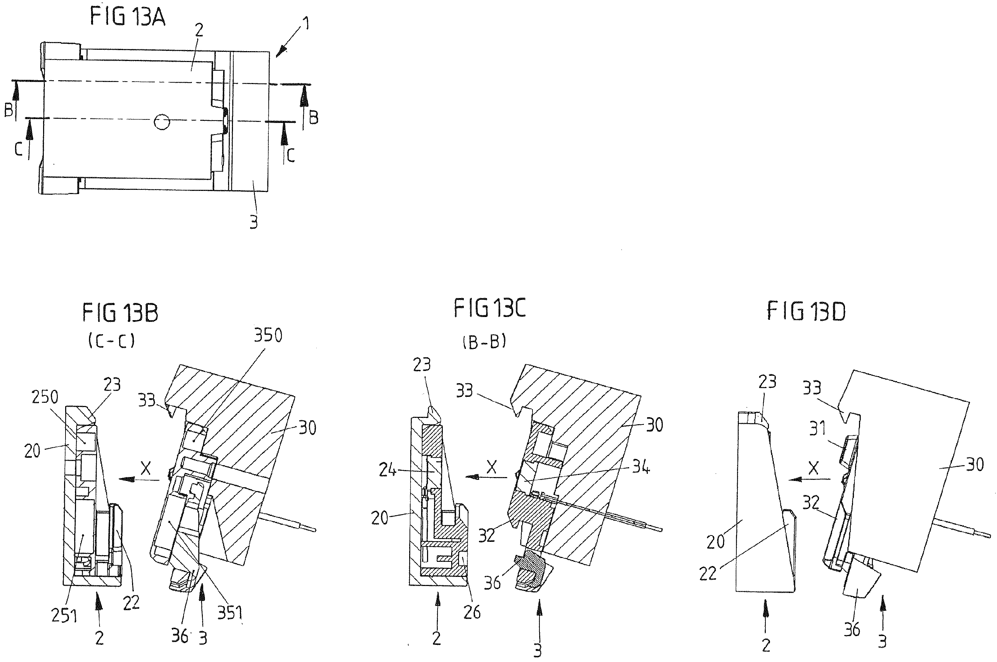

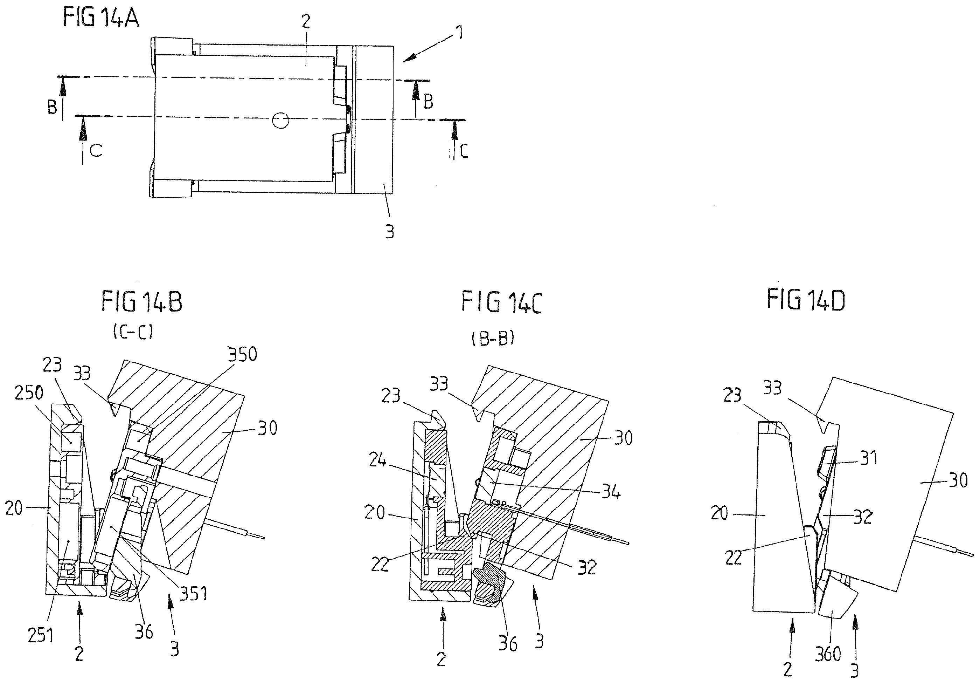

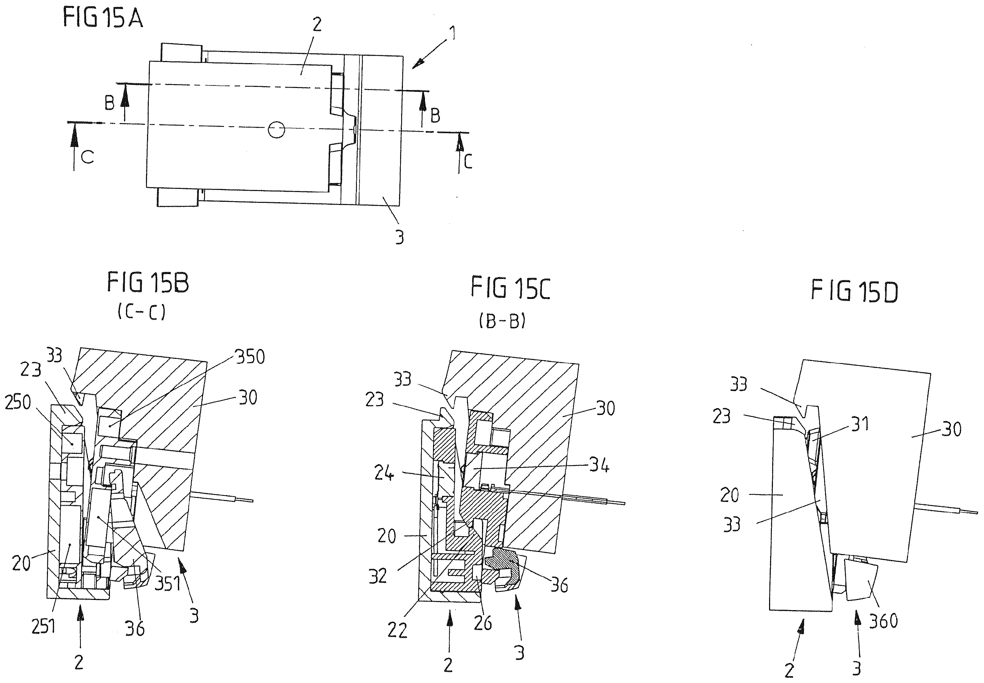

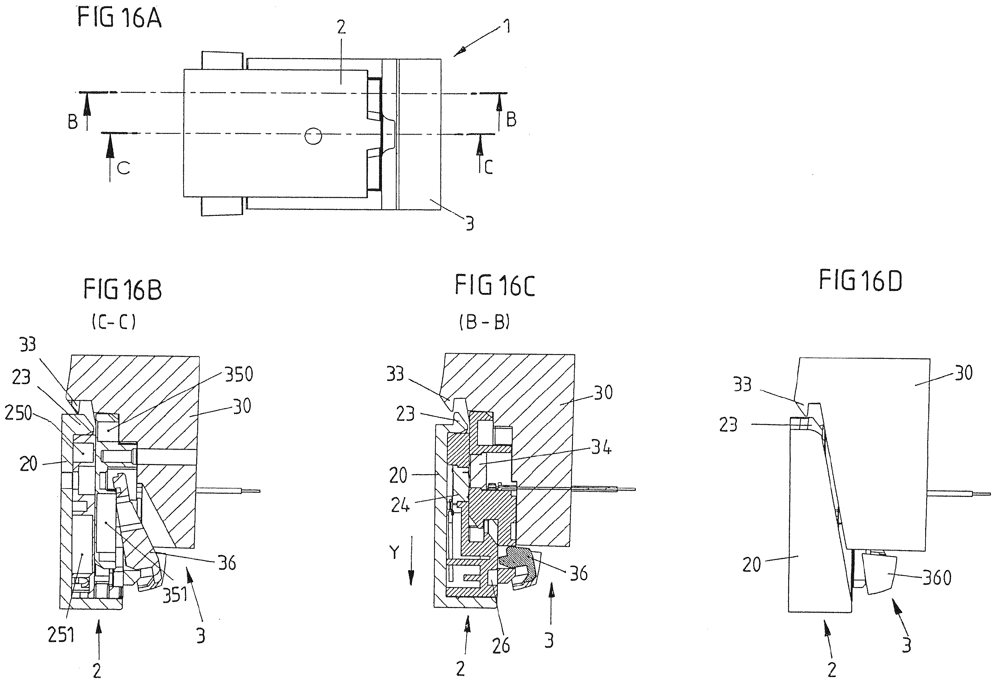

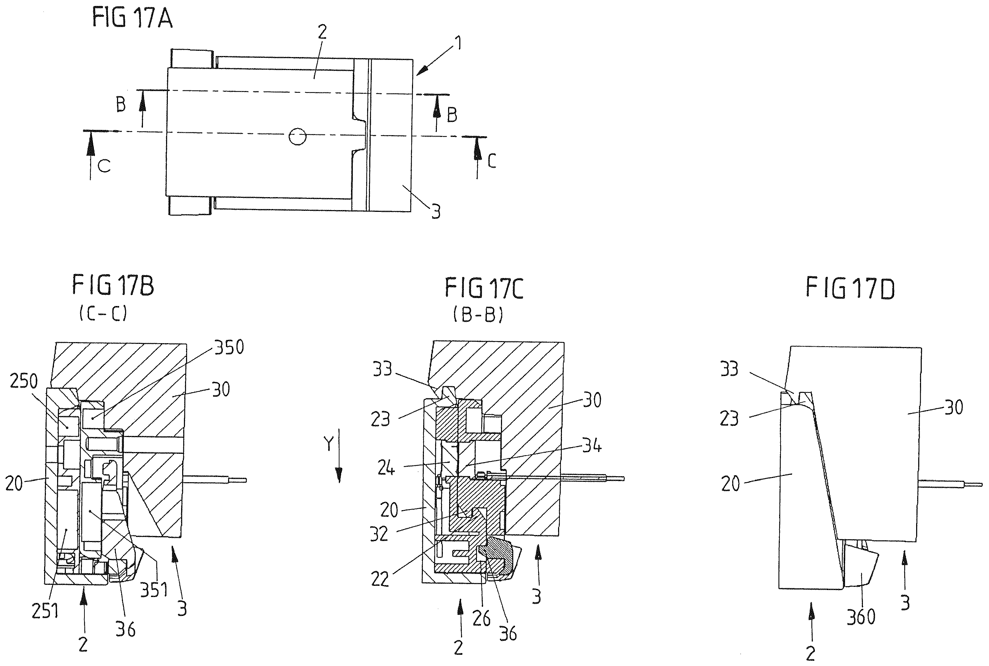

Bei schrägem Ansetzen wie in Fig. 13A-13D und 14A-14D gelangen zunächst die Eingriffsvorsprünge 220, 221, 320, 321 miteinander in Anlage, und durch Verkippen (Fig. 15C) werden auch die Eingriffsvorsprünge 23, 33 hin zueinander bewegt und gelangen in Eingriff miteinander, wie dies in Fig. 16C und 17C dargestellt ist.

Die vorteilhafte Kombination der winklig angeordneten Eingriffsvorsprünge 220, 221, 320, 321, des in der Nähe dieser Eingriffsvorsprünge angeordneten Sperrelements 36 und der geraden Eingriffsvorsprünge 23, 33 bewirkt, dass es keine Fehlstellung gibt, d.h. dass nicht versehentlich nur eine Gruppe von Eingriffsvorsprüngen eingreift und das Sperrelement einrastet. Dabei können die winkligen angeordneten Eingriffsvorsprünge 220, 221, 320, 321 auch durch funktionsgleiche bogenförmige Eingriffsvorsprünge gebildet sein.

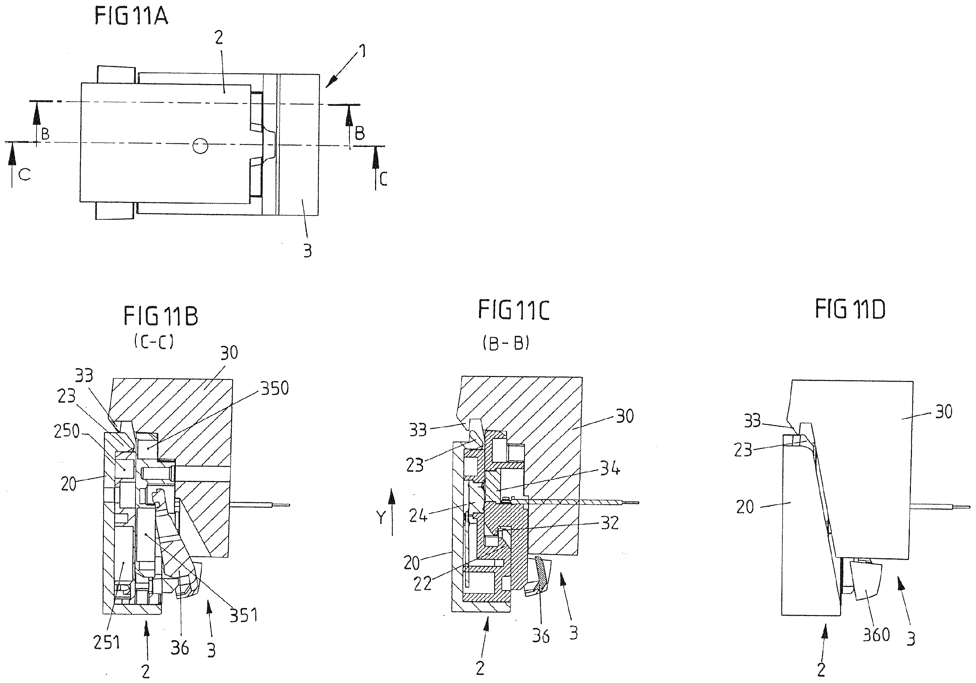

Jeweils gleiten auch bei schrägem Ansetzen der Verschlussteile 2, 3 aneinander die Kontaktelemente 24, 34 übereinander, wenn die Eingriffsvorsprünge 220, 221, 320, 321, 23, 33 miteinander in Eingriff gelangen und bevor die Schließstellung hergestellt ist, wie dies aus Fig. 11C und 16C ersichtlich ist. Wiederum erfolgt das Herstellen der Verbindung der Verschlussteile 2, 3 somit unter einem Schleifen der Kontaktelemente 24, 34 übereinander.

Soll der Verschluss 1 geöffnet werden, so kann über einen Betätigungsgriff 360 das Sperrelement 36 aus seinem Eingriff mit der Sperröffnung 26 heraus bewegt werden, sodass die Sperrung zwischen den Verschlussteilen 2, 3 aufgehoben ist und die Verschlussteile 2, 3 entgegen der Eingriffsrichtung Y aus ihrem formschlüssigen Eingriff gelöst werden können. Durch Abschieben der Verschlussteile 2, 3 voneinander entgegen der Eingriffsrichtung Y (in eine Öffnungsrichtung Z, siehe Fig. 2C) können die Verschlussteile 2, 3 somit zum Lösen der den Verschlussteilen 2, 3 zugeordneten Baugruppen voneinander getrennt werden.

Bei Ansetzen der Verschlussteile 2, 3 aneinander gelangt auch ein Führungselement 31 an dem Verschlussteil 3 in Eingriff mit einer Führungsöffnung 21 an dem anderen Verschlussteil 2. Darüber wird eine lineare Führung der Verschlussteile 2, 3 entlang der Eingriffsrichtung Y aneinander bereitgestellt, sodass, bei Ansetzen der Verschlussteile 2, 3 aneinander, die Verschlussteile 2, 3 entlang der Eingriffsrichtung Y zueinander geführt sind und somit insbesondere quer zur Eingriffsrichtung Y zueinander festgelegt sind.

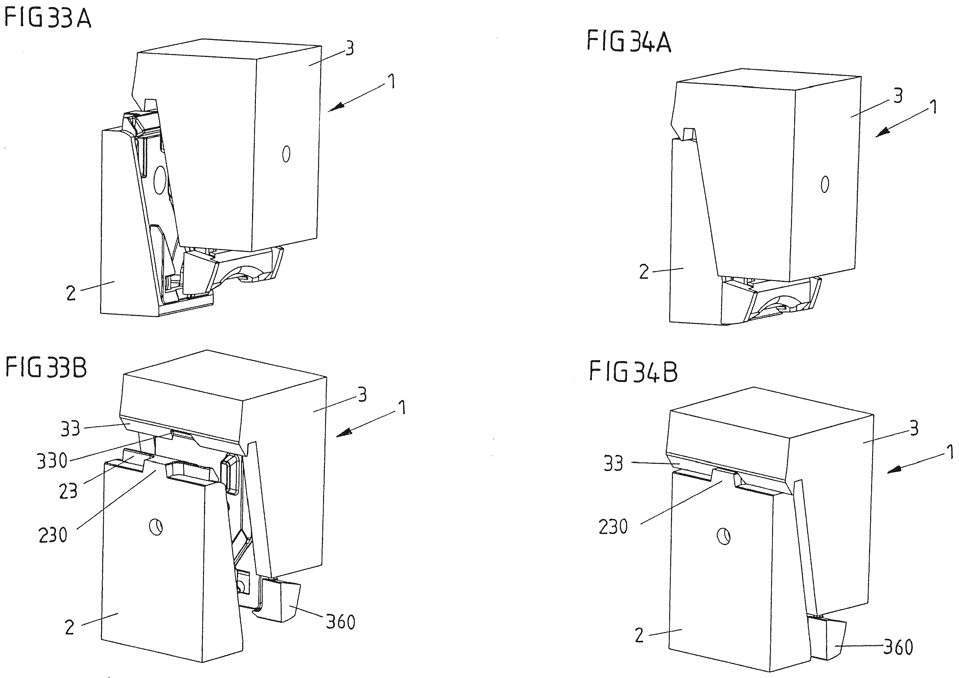

Unterhalb des Eingriffsvorsprungs 23 ist an dem Verschlussteil 2 ein Eingriffselement 230 ausgebildet, wie dies zum Beispiel aus Fig. 31A und Fig. 33B ersichtlich ist. Dem Eingriffselement 230 ist eine Eingriffsöffnung 330 an dem Eingriffsvorsprung 33 des anderen Verschlussteils 3 zugeordnet (siehe Fig. 33B), sodass in der Schließstellung der Verschlussvorrichtung 1, dargestellt in Fig. 34A, 34B, über den Eingriff des Eingriffselements 230 in die Eingriffsöffnung 330 die Verschlussteile 2, 3 zusätzlich quer zur Eingriffsrichtung Y zueinander festgelegt sind.

Eine Verschlussvorrichtung 1 der beschriebenen Art kann zum Verbinden ganz beliebiger Baugruppen miteinander dienen. In der Schließstellung der Verschlussvorrichtung 1 sind die Baugruppen mechanisch fest miteinander verbunden, bei gleichzeitiger elektrischer Kontaktierung der Verschlussteile 2, 3 miteinander, sodass zum Beispiel eine Energieversorgung/Energieübertragung zwischen den Baugruppen bereitgestellt werden kann.

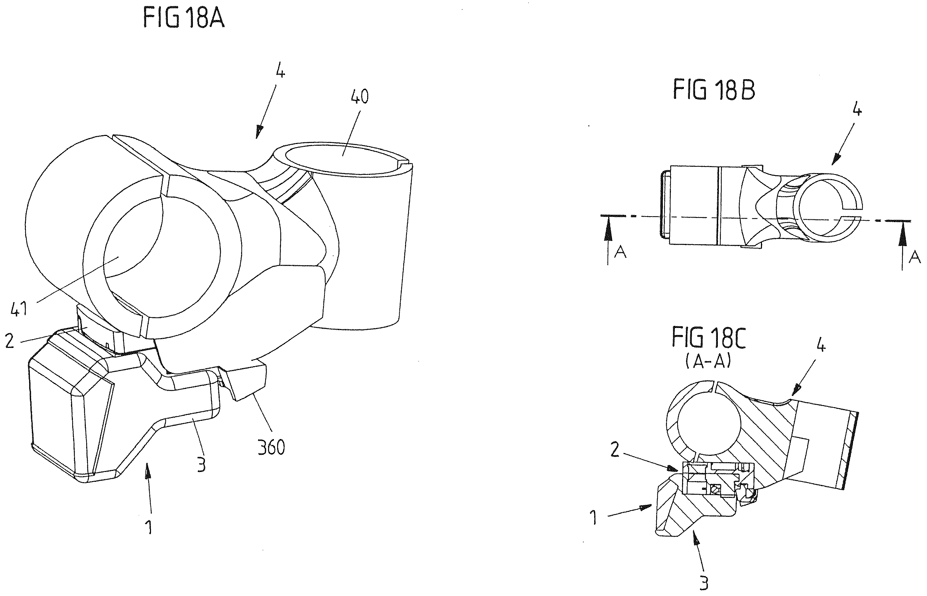

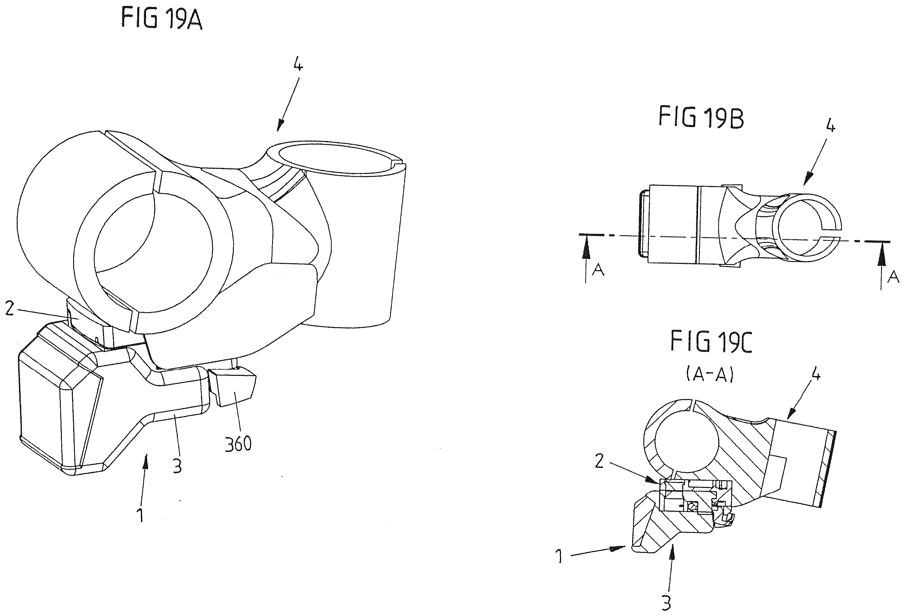

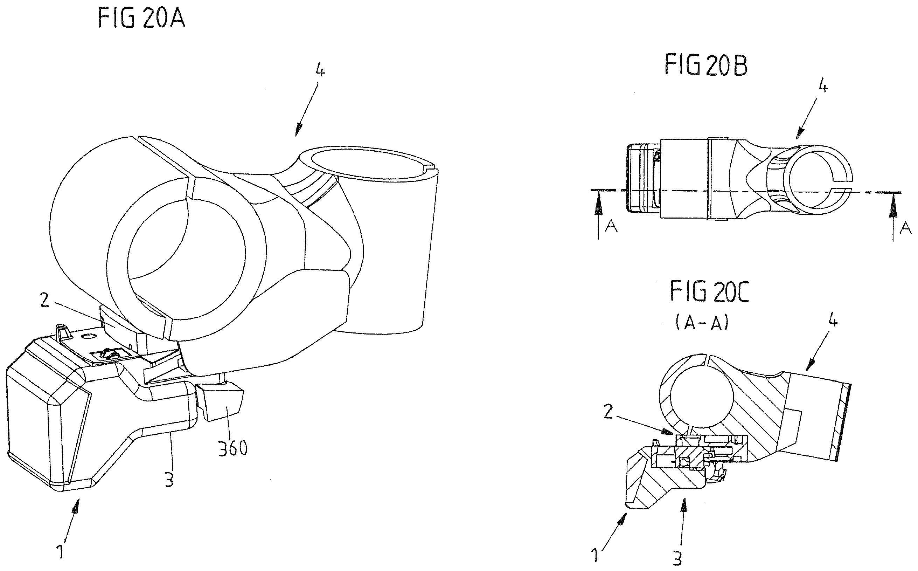

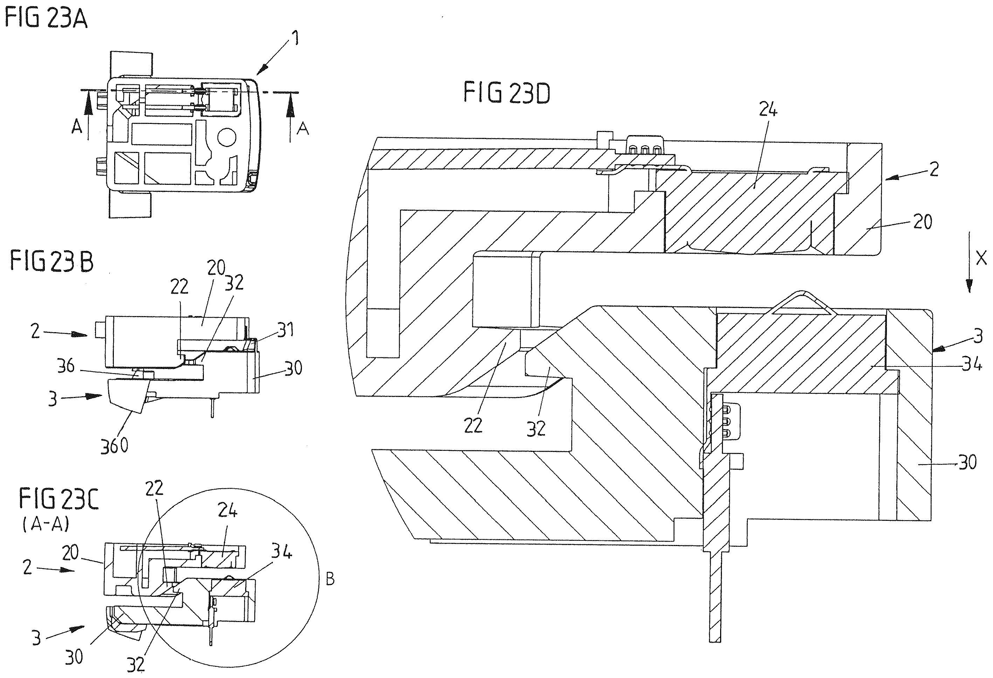

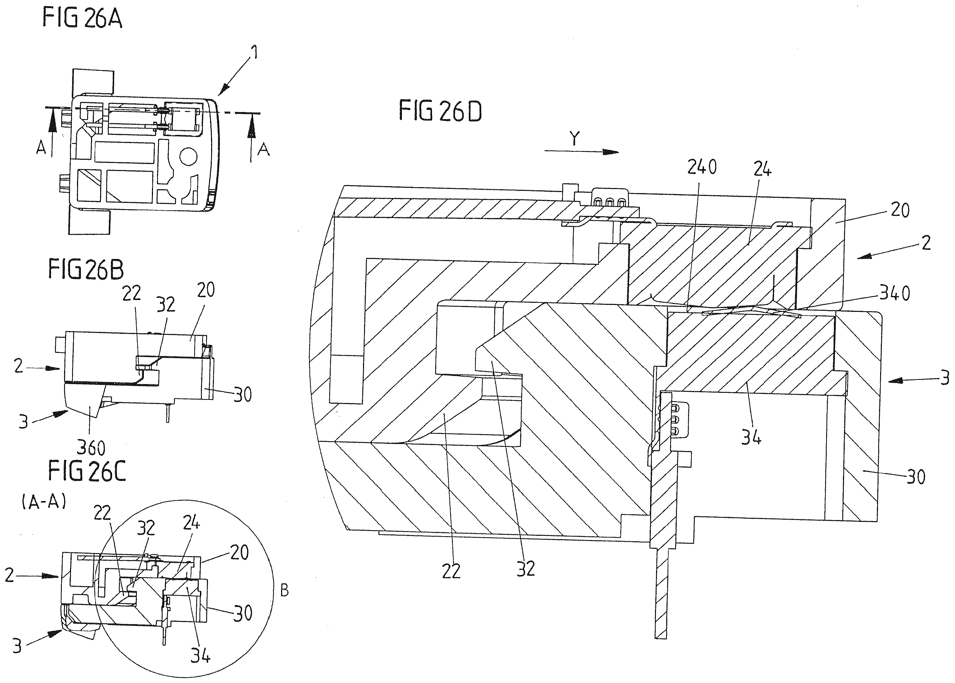

Bei einem in Fig. 18A-18C bis 27A-27D dargestellten Ausführungsbeispiel dient die Verschlussvorrichtung 1 zum Anbringen eines Fahrradlichts an einem Fahrrad und ist entsprechend einer Halterung 4 zugeordnet, die über Befestigungsöffnungen 40, 41 zum Beispiel eine Lenkstange eines Fahrrads mit einer Vorderradgabel verbinden kann.

Bei dem dargestellten Ausführungsbeispiel ist das Verschlussteil 2 an der Halterung 4 angebracht, während das andere Verschlussteil 3 dem Fahrradlicht zugeordnet ist. Durch Ansetzen der Verschlussteile 2, 3 aneinander kann das Fahrradlicht an der Halterung 4 und somit an dem Fahrrad angebracht werden, unter gleichzeitiger elektrischer Kontaktierung zum Beispiel zum Zwecke der elektrischen Versorgung des Fahrradlichts.

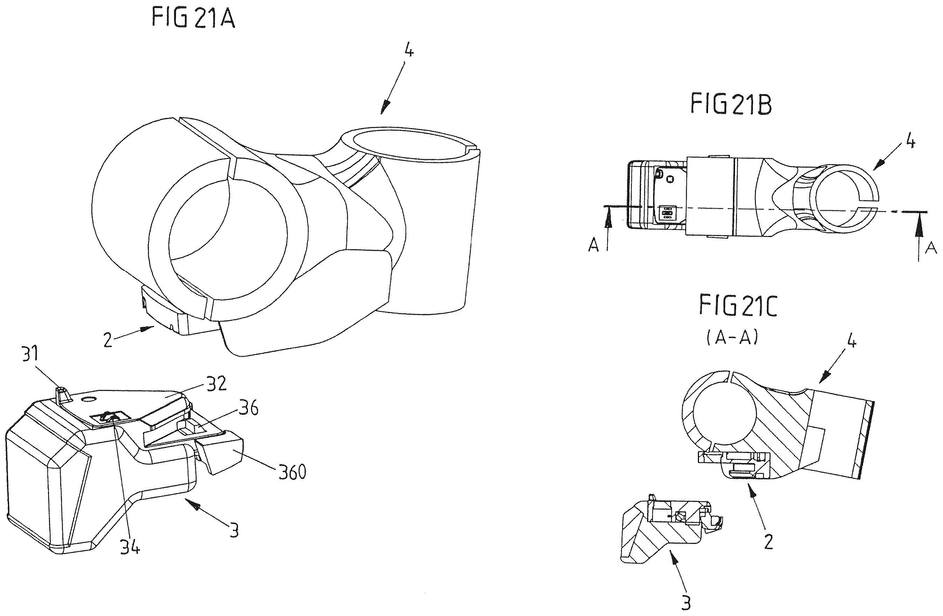

Soll das Fahrradlicht von der Halterung 4 gelöst werden, kann der Betätigungsgriff 360 betätigt werden, um auf diese Weise die Stellung zwischen den Verschlussteile 2, 3 aufzuheben, sodass das Fahrradlicht, wie dies in Fig. 21A-21D dargestellt ist, von der Halterung 4 gelöst werden kann.

Bei dem Ausführungsbeispiel gemäß Fig. 18A-18C bis 27A-27D weisen die Verschlussteile 2, 3 keine weitere, zusätzlichen Eingriffsvorsprünge 23, 33 auf. Ansonsten ist dieses Ausführungsbeispiel funktional identisch dem vorangehend beschriebenen Ausführungsbeispiel, sodass auf das vorangehend Ausgeführte verwiesen werden soll.

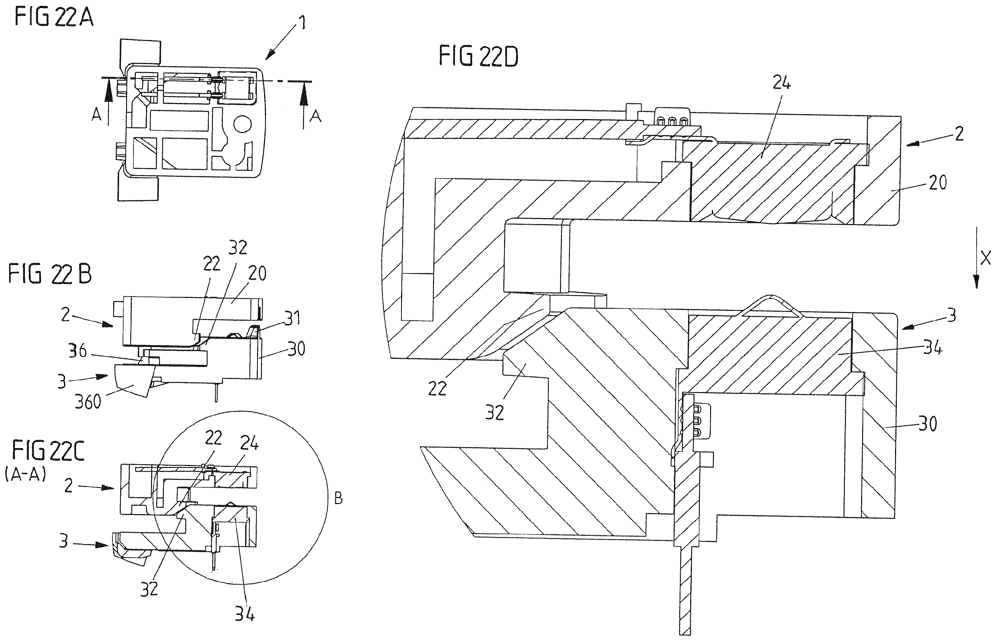

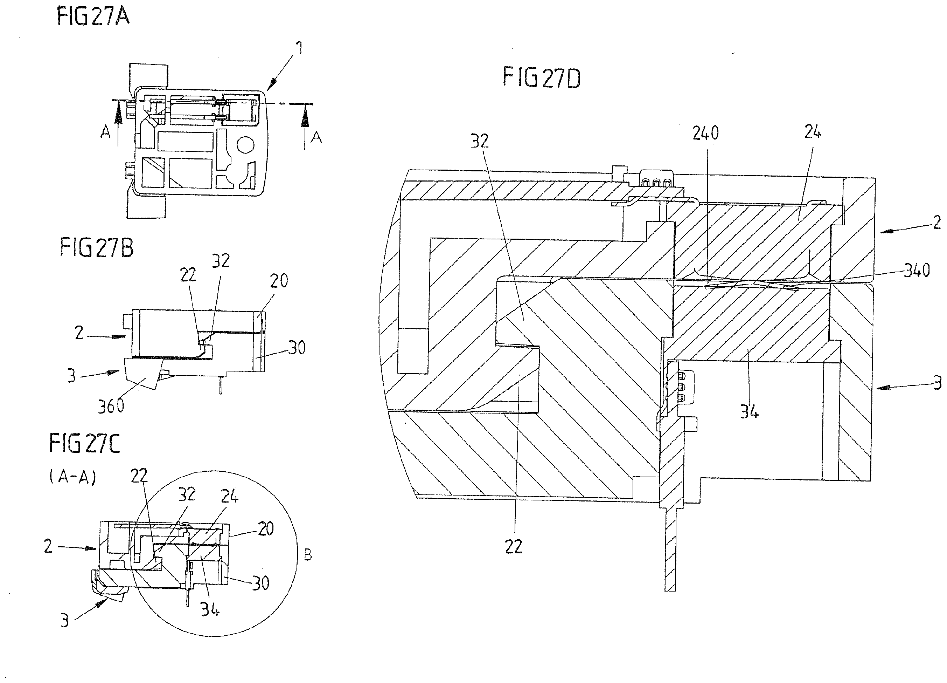

In der Abfolge von Fig. 22D bis 27D ist in vergrößerten Schnittansichten dargestellt, wie beim Schließen der Verschlussvorrichtung 1 die elektrischen Kontaktelemente 24, 34 schleifend übereinander gleiten, um in der Schließstellung elektrisch miteinander in Kontakt zu kommen (Fig. 27D). Dies gilt identisch für das Ausführungsbeispiel gemäß Fig. 18A-18C bis 27A-27D wie für das vorangehend beschriebene Ausführungsbeispiel.

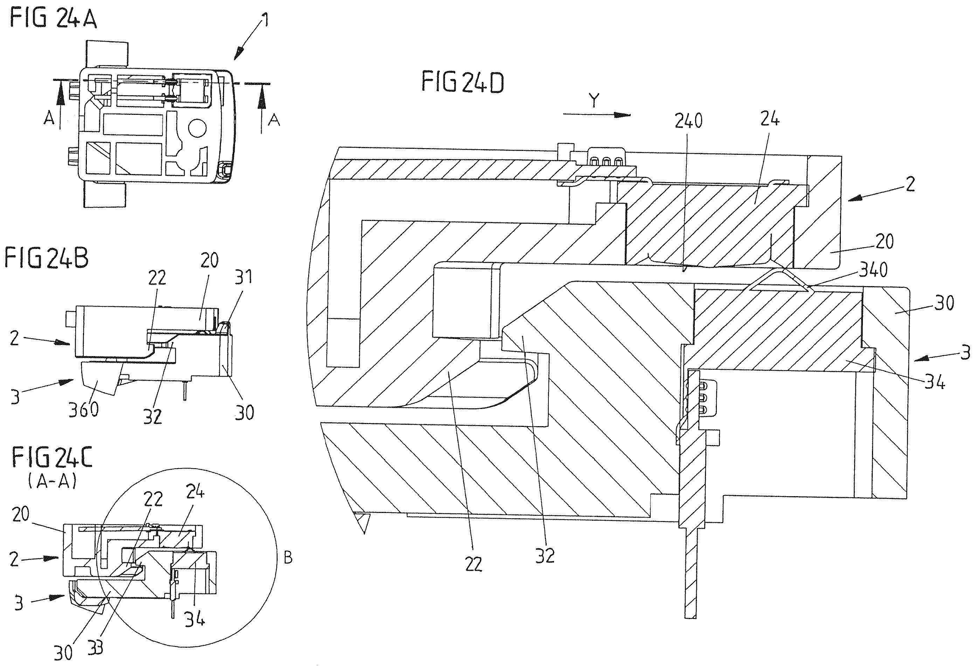

Werden die Verschlussteile 2, 3 in die Schließrichtung X aneinander angesetzt, laufen zunächst die Eingriffsvorsprünge der Eingriffseinrichtungen 22, 32 aufeinander auf, wie dies aus der Abfolge von Fig. 22D hin zu Fig. 24D ersichtlich ist. Dadurch bewegen sich die Eingriffsvorsprünge der Eingriffseinrichtungen 22, 32 aneinander vorbei, unter geringfügigem Versatz der Verschlussteile 2, 3 relativ zueinander entgegen der Eingriffsrichtung Y.

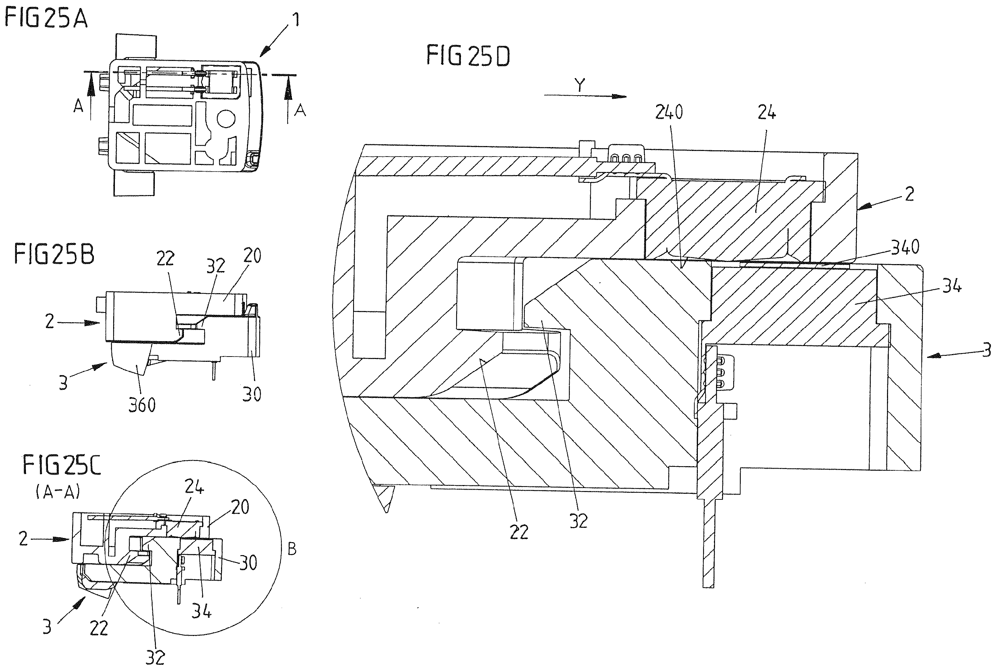

Bei Annähern der Verschlussteile 2, 3 in die Schließrichtung X aneinander wirkt das Kontaktelement 24 des Verschlussteils 2 auf eine Kontaktfeder 340, die von dem Kontaktelement 34 vorsteht, ein und spannt diese, wie dies im Übergang von Fig. 24D hin zu Fig. 25D ersichtlich ist. Bewegen sich nunmehr die Verschlussteile 2, 3 in die Eingriffsrichtung Y in formschlüssigen Eingriff miteinander, so gleiten die Kontaktelemente 24, 34 schleifend übereinander, insbesondere unter mechanisch gespannter Anlage der Kontaktfeder 340 an einer Oberfläche 240 des Kontaktelements 24.

Durch das Schleifen der Kontaktelemente 24, 34 aneinander können Verschmutzungen beseitigt sowie gegebenenfalls einer Oxidschicht, die sich an den Kontaktelementen 24, 34 gebildet haben könnte, freigekratzt werden, sodass in der Schließstellung (Fig. 27D) eine zuverlässige elektrische Kontaktierung zwischen den Kontaktelementen 24, 34 besteht.

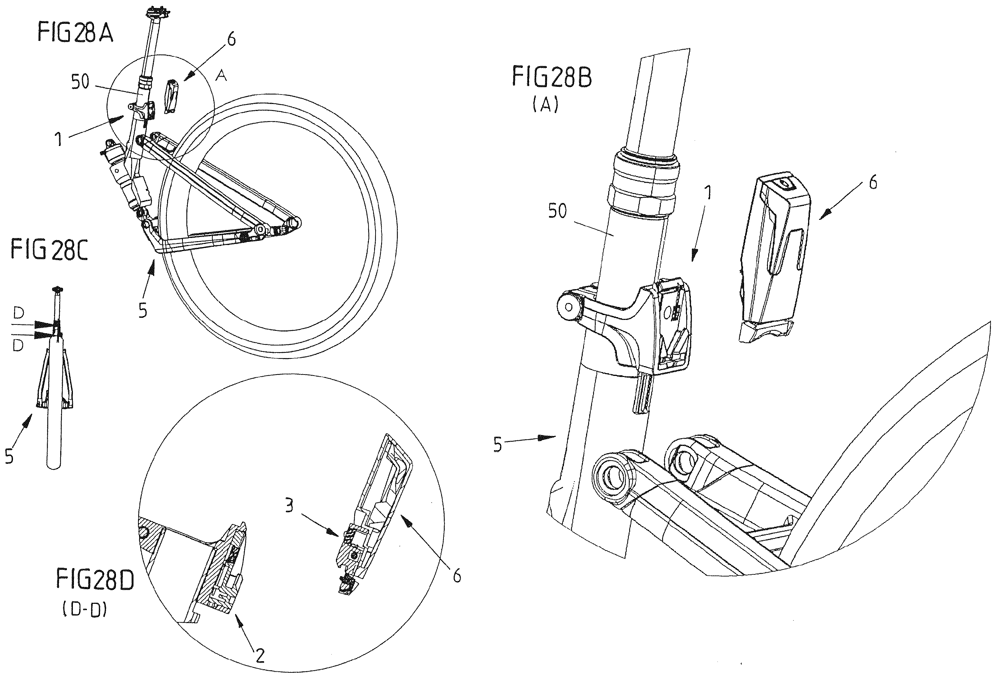

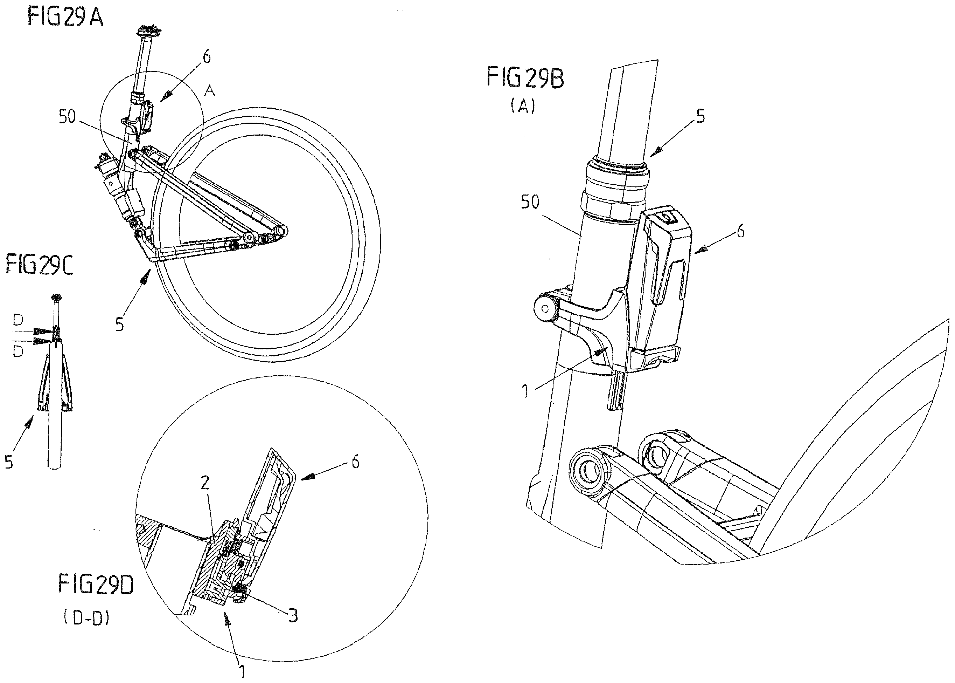

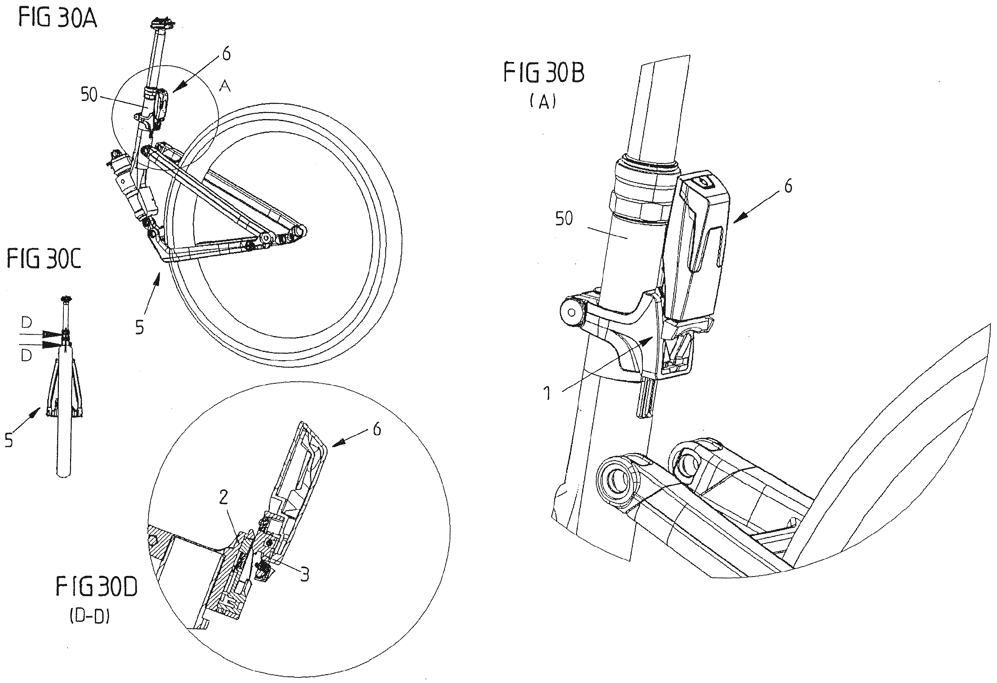

Die Verschlussvorrichtung 1 kann auch zum Verbinden anderer Baugruppen eines Fahrrads dienen, zum Beispiel auch zum Anschließen eines Rücklichts 6 an einen Fahrradrahmen 50 eines Fahrrads 5, wie dies in Fig. 28A-28D bis 30A-30D dargestellt ist. Wiederum dient die Verschlussvorrichtung 1 zum Herstellen eines mechanischen Halts des Rücklichts 6 an dem Fahrradrahmen 50 und zudem zur elektrischen Kontaktierung.

Zur funktionalen Ausgestaltung und zur Funktionsweise beim Schließen und Öffnen der Verschlussvorrichtung 1 soll für die Ausführungsbeispiele gemäß Fig. 18A-18C bis 27A-27D und Fig. 28A-28D bis 30A-30D vollumfänglich auf die Erläuterungen zum zuerst beschriebenen Ausführungsbeispiel verwiesen werden.

Der der Erfindung zugrunde liegende Gedanke ist nicht auf die vorangehend geschilderten Ausführungsbeispiele beschränkt, sondern lässt sich grundsätzlich auch in gänzlich anders gearteten Ausführungsformen verwirklichen.

Eine Verschlussvorrichtung kann insbesondere auch ohne elektrische Kontakte ausgebildet sein und somit zum rein mechanisch-magnetischen Verbinden zweier Baugruppen miteinander dienen.

Eine Verschlussvorrichtung - mit oder ohne elektrische Kontaktelemente - kann zum Verbinden von Baugruppen an einem Fahrrad Verwendung finden, kann aber auch zum Verbinden beliebiger anderer Baugruppen miteinander dienen.

### Bezugszeichenliste

- 1: Verschlussvorrichtung
- 2: Verschlussteil
- 20: Grundkörper
- 200, 201: Teilkörper
- 21: Führungsöffnung
- 22: Eingriffseinrichtung
- 220, 221: Eingriffsvorsprung
- 222: Auflaufschräge
- 23: Eingriffseinrichtung
- 230: Eingriffselement
- 24: Elektrischer Kontakt
- 240: Oberfläche
- 25: Magneteinrichtung
- 250, 251: Magnetelement
- 26: Sperröffnung
- 3: Verschlussteil
- 30: Grundkörper
- 300, 301: Bauteil
- 31: Führungselement
- 310: Öffnung
- 32: Eingriffseinrichtung
- 320, 321: Eingriffsvorsprung
- 322: Auflaufschräge
- 33: Eingriffseinrichtung
- 330: Eingriffsöffnung
- 34: Elektrischer Kontakt
- 340: Federelement
- 35: Magneteinrichtung
- 350, 351: Magnetelemente
- 36: Sperrelement
- 360: Betätigungsgriff
- 361: Schwenkachse
- 37: Federelement
- 4: Halterung
- 40, 41: Befestigungsöffnung
- 5: Fahrrad
- 50: Fahrradrahmen
- 6: Licht
- X: Schließrichtung
- Y: Eingriffsrichtung
- Z: Öffnungsrichtung

## Patentansprüche

1. Verschlussvorrichtung (1) zum lösbaren Verbinden zweier Teile, mit
- einem ersten Verschlussteil (2), das einen ersten Eingriffsvorsprung (220, 221) aufweist,
- einem zweiten Verschlussteil (3), das einen zweiten Eingriffsvorsprung (320, 321) aufweist, wobei das erste Verschlussteil (2) und das zweite Verschlussteil (3) zum Schließen der Verschlussvorrichtung (1) aneinander ansetzbar und in einer Schließstellung mechanisch miteinander verbunden sind, indem der erste Eingriffsvorsprung (220, 221) und der zweite Eingriffsvorsprung (320, 321) in der Schließstellung formschlüssig miteinander in Eingriff stehen, und
- einer zwischen dem ersten Verschlussteil (2) und dem zweiten Verschlussteil (3) wirkenden magnetischen Einrichtung (25, 35), die ausgebildet ist, das Ansetzen des ersten Verschlussteils (2) und des zweiten Verschlussteils (3) aneinander durch Bereitstellen einer magnetischen Anziehungskraft zu unterstützen,
wobei das erste Verschlussteil (2) zumindest ein erstes elektrisches Kontaktelement (24) und das zweite Verschlussteil (3) zumindest ein zweites elektrisches Kontaktelement (34) aufweisen, wobei in der Schließstellung das zumindest eine erste elektrische Kontaktelement (24) und das zumindest eine zweite elektrische Kontaktelement (34) elektrisch kontaktierend miteinander in Wirkverbindung sind,
wobei der erste Eingriffsvorsprung (220, 221) und der zweite Eingriffsvorsprung (320, 321) starr an einem Grundkörper (20, 30) des jeweils zugeordneten Verschlussteils (2, 3) ausgebildet sind,
**gekennzeichnet durch**
ein an einem der Verschlussteile (2, 3) angeordnetes Sperrelement (36), das beim Ansetzen der Verschlussteile (2, 3) aneinander derart aus einer Grundstellung an dem zugeordneten Verschlussteil (2, 3) auslenkbar ist, dass der erste Eingriffsvorsprung (220, 221) und der zweite Eingriffsvorsprung (320, 321) zum Schließen der Verschlussvorrichtung (1) in Eingriff miteinander bringbar sind, wobei das Sperrelement (36) ausgebildet ist, sich bei oder nach Herstellung des Eingriffs zurück in seine Grundstellung zu bewegen, um in der Schließstellung den formschlüssigen Eingriff des ersten Eingriffsvorsprungs (220, 221) und des zweiten Eingriffsvorsprungs (320, 321) miteinander zu sperren.

2. Verschlussvorrichtung nach Anspruch 1, **dadurch gekennzeichnet, dass** das Sperrelement (36) schwenkbar an dem zugeordneten Verschlussteil (2, 3) angeordnet ist.

3. Verschlussvorrichtung nach Anspruch 1 oder 2, **dadurch gekennzeichnet, dass** das erste Verschlussteil (2) und das zweite Verschlussteil (3) jeweils zumindest ein Magnetelement (250, 251, 350, 351) aufweisen, die gemeinsam die magnetische Einrichtung (25, 35) verwirklichen und beim Schließen der Verschlussvorrichtung magnetisch anziehend zusammenwirken.

4. Verschlussvorrichtung (1) nach Anspruch 3, **dadurch gekennzeichnet, dass** das zumindest eine Magnetelement (250, 251) des ersten Verschlussteils (2) und das zumindest eine Magnetelement (350, 351) des zweiten Verschlussteils (3) ausgebildet sind, beim Ansetzen des ersten Verschlussteils (2) und des zweiten Verschlussteils (3) aneinander so zusammenwirken, das eine Komponente der magnetischen Anziehungskraft in eine Eingriffsrichtung (Y) wirkt, in die der erste Eingriffsvorsprung (220, 221) und der zweite Eingriffsvorsprung miteinander in Eingriff bringbar sind.

5. Verschlussvorrichtung (1) nach Anspruch 4, **dadurch gekennzeichnet, dass** das zumindest eine Magnetelement (250, 251) des ersten Verschlussteils (2) und das zumindest eine Magnetelement (350, 351) des zweiten Verschlussteils (3) in der Schließstellung derart, betrachtet entlang der Eingriffsrichtung (Y), zueinander versetzt sind, dass in der Schließstellung eine magnetische Anziehungskraft zwischen dem ersten Verschlussteil (2) und dem zweiten Verschlussteil (3) in die Eingriffsrichtung (Y) wirkt.

6. Verschlussvorrichtung nach einem der vorangehenden Ansprüche, **dadurch gekennzeichnet, dass** an dem ersten Verschlussteil (2) zwei erste Eingriffsvorsprünge (220, 221) und an dem zweiten Verschlussteil (3) zwei zweite Eingriffsvorsprünge (320, 321) angeordnet sind, wobei die ersten Eingriffsvorsprünge (220, 221) zur Ausbildung einer ersten Eingriffseinrichtung (22) und die zweiten Eingriffsvorsprünge (320, 321) zur Ausbildung einer zweiten Eingriffseinrichtung (32) sich jeweils unter einem Winkel zueinander erstrecken.

7. Verschlussvorrichtung (1) nach Anspruch 6, **dadurch gekennzeichnet, dass** die ersten Eingriffsvorsprünge (220, 221) und die zweiten Eingriffsvorsprünge jeweils schräg zu einer Eingriffsrichtung (Y), in die die Eingriffseinrichtungen (22, 32) miteinander in Eingriff bringbar sind, erstreckt sind.

8. Verschlussvorrichtung (1) nach Anspruch 6 oder 7, **dadurch gekennzeichnet, dass** das erste Verschlussteil (2) einen zur ersten Eingriffseinrichtung (22) zusätzlichen Eingriffsvorsprung (23) und das zweite Verschlussteil (3) einen zur zweiten Eingriffseinrichtung (32) zusätzlichen Eingriffsvorsprung (33) aufweisen, wobei der zur ersten Eingriffseinrichtung (22) zusätzliche Eingriffsvorsprung (23) entlang der Eingriffsrichtung (Y) zu den ersten Eingriffsvorsprüngen (220, 221) versetzt ist und der zur zweiten Eingriffseinrichtung (32) zusätzliche Eingriffsvorsprung (33) entlang der Eingriffsrichtung (Y) zu den zweiten Eingriffsvorsprüngen (320, 321) versetzt ist.

9. Verschlussvorrichtung (1) nach Anspruch 8, **dadurch gekennzeichnet, dass** der zur ersten Eingriffseinrichtung (22) zusätzliche Eingriffsvorsprung (23) und der zur zweiten Eingriffseinrichtung (32) zusätzliche Eingriffsvorsprung (33) jeweils quer zur Eingriffsrichtung (Y) erstreckt sind.

10. Verschlussvorrichtung (1) nach einem der vorangehenden Ansprüche, **dadurch gekennzeichnet, dass** zumindest eins der elektrischen Kontaktelemente (24, 34) eine Kontaktfeder (340) aufweist, die bei Ansetzen der Verschlussteile (2, 3) aneinander elastisch verformbar ist.

11. Verschlussvorrichtung (1) nach einem der vorangehenden Ansprüche, **dadurch gekennzeichnet, dass** beim Ansetzen der Verschlussteile (2, 3) aneinander und/oder beim Lösen der Verschlussteile (2, 3) voneinander das zumindest eine erste elektrische Kontaktelement (24) und das zumindest eine zweite elektrische Kontaktelement (34) mit Oberflächen (240) tangential aneinander gleiten.

12. Verschlussvorrichtung (1) nach einem der vorangehenden Ansprüche, **dadurch gekennzeichnet, dass** eins der Verschlussteile (2, 3) ein Führungselement (31) aufweist, das beim Ansetzen der Verschlussteile (2, 3) in eine Führungsöffnung (21) des anderen der Verschlussteile (2, 3) zum Führen der Ansetzbewegung der Verschlussteile (2, 3) zueinander eingreift.

## Claims

1. A closing device (1) for releasably connecting two parts, comprising
- a first closing part (2), which has a first engaging projection (220, 221),
- a second closing part (3) which has a second engaging projection (320, 321), wherein the first closing part (2) and the second closing part (3) can be attached to each other in order to close the closing device (1) and, in a closed position, are interconnected mechanically by the first engaging projection (220, 221) and the second engaging projection (320, 321) being in engagement with each other in a positive locking manner in the closed position, and
- a magnetic device (25, 35) which acts between the first closing part (2) and the second closing part (3) and is designed to assist the attaching of the first closing part (2) and the second closing part (3) to each other by providing a magnetic attraction force,
wherein the first closing part (2) has at least one first electrical contact element (24) and the second closing part (3) has at least one second electrical contact element (34), wherein, in the closed position, the at least one first electrical contact element (24) and the at least one second electrical contact element (34) are operatively connected to one another in an electrically contacting manner,
wherein the first engaging projection (220, 221) and the second engaging projection (320, 321) are formed rigidly on a basic body (20, 30) of the respectively associated closing part (2, 3),
**characterized by**
a blocking element (36) which is arranged on one of the closing parts (2, 3) and, when the closing parts (2, 3) are attached to each other, is deflectable out of a basic position on the associated closing part (2, 3) in such a manner that the first engaging projection (220, 221) and the second engaging projection (320, 321) can be brought into engagement with each other in order to close the closing device (1), wherein the blocking element (36) is designed to move back into its basic position during or after production of the engagement in order, in the closed position, to block the positive locking engagement of the first engaging projection (220, 221) and the second engaging projection (320, 321) with each other.

2. The closing device as claimed in claim 1, **characterized in that** the blocking element (36) is arranged pivotably on the associated closing part (2, 3).

3. The closing device as claimed in claim 1 or 2, **characterized in that** the first closing part (2) and the second closing part (3) each have at least one magnetic element (250, 251, 350, 351) which together realize the magnetic device (25, 35) and interact in a magnetically attracting manner during the closing of the closing device.

4. The closing device (1) as claimed in claim 3, **characterized in that** the at least one magnetic element (250, 251) of the first closing part (2) and the at least one magnetic element (350, 351) of the second closing part (3) are designed to interact, when the first closing part (2) and the second closing part (3) are attached to each other, in such a manner that a component of the magnetic attraction force acts in an engaging direction (Y) in which the first engaging projection (220, 221) and the second engaging projection can be brought into engagement with each other.

5. The closing device (1) as claimed in claim 4, **characterized in that** the at least one magnetic element (250, 251) of the first closing part (2) and the at least one magnetic element (350, 351) of the second closing part (3) are offset with respect to one another, as viewed along the engaging direction (Y), in the closed position in such a manner that, in the closed position, a magnetic attraction force acts between the first closing part (2) and the second closing part (3) in the engaging direction (Y).

6. The closing device as claimed in one of the preceding claims, **characterized in that** two first engaging projections (220, 221) are arranged on the first closing part (2) and two second engaging projections (320, 321) are arranged on the second closing part (3), wherein the first engaging projections (220, 221) for forming a first engaging device (22) and the second engaging projections (320, 321) for forming a second engaging device (32) each extend at an angle to one another.

7. The closing device (1) as claimed in claim 6, **characterized in that** the first engaging projections (220, 221) and the second engaging projections are each extended obliquely with respect to an engaging direction (Y) in which the engaging devices (22, 32) can be brought into engagement with each other.

8. The closing device (1) as claimed in claim 6 or 7, **characterized in that** the first closing part (2) has an additional engaging projection (23) to the first engaging device (22) and the second closing part (3) has an additional engaging projection (33) to the second engaging device (32), wherein the additional engaging projection (23) to the first engaging device (22) is offset along the engaging direction (Y) with respect to the first engaging projections (220, 221) and the additional engaging projection (33) to the second engaging device (32) is offset along the engaging direction (Y) with respect to the second engaging projections (320, 321).

9. The closing device (1) as claimed in claim 8, **characterized in that** the additional engaging projection (23) to the first engaging device (22) and the additional engaging projection (33) to the second engaging device (32) are each extended transversely with respect to the engaging direction (Y).

10. The closing device (1) as claimed in one of the preceding claims, **characterized in that** at least one of the electrical contact elements (24, 34) has a contact spring (340) which is elastically deformable when the closing parts (2, 3) are attached to each other.

11. The closing device (1) as claimed in one of the preceding claims, **characterized in that**, when the closing parts (2, 3) are attached to each other and/or when the closing parts (2, 3) are released from each other, the at least one first electrical contact element (24) and the at least one second electrical contact element (34) slide tangentially on one another by means of surfaces (240).

12. The closing device (1) as claimed in one of the preceding claims, **characterized in that** one of the closing parts (2, 3) has a guide element (31) which, when the closing parts (2, 3) are attached, engages in a guide opening (21) in the other of the closing parts (2, 3) in order to guide the attaching movement of the closing parts (2, 3) to each other.

## Revendications

1. Dispositif de fermeture (1) pour la liaison libérable de deux pièces, avec
- une première pièce de fermeture (2) qui présente une première saillie d'insertion (220, 221),
- une deuxième pièce de fermeture (3) qui présente une deuxième saillie d'insertion (320, 321), dans lequel la première pièce de fermeture (2) et la deuxième pièce de fermeture (3) pour fermer le dispositif de fermeture (1) peuvent être appliquées l'une sur l'autre et reliées mécaniquement l'une à l'autre dans une position de fermeture, du fait que la première saillie d'insertion (220, 221) et la deuxième saillie d'insertion (320, 321) sont en prise l'une avec l'autre par coopération de formes dans la position de fermeture, et
- un système magnétique (25, 35) agissant entre la première pièce de fermeture (2) et la deuxième pièce de fermeture (3), qui est réalisé pour assister l'application de la première pièce de fermeture (2) et de la deuxième pièce de fermeture (3) l'une sur l'autre en fournissant une force d'attraction magnétique,
dans lequel la première pièce de fermeture (2) présente au moins un premier élément de contact électrique (24) et la deuxième pièce de fermeture (3) au moins un deuxième élément de contact électrique (34), dans lequel dans la position de fermeture l'au moins un premier élément de contact électrique (24) et l'au moins un deuxième élément de contact électrique (34) sont en liaison fonctionnelle l'un avec l'autre par contact électrique,
dans lequel la première saillie d'insertion (220, 221) et la deuxième saillie d'insertion (320, 321) sont réalisées rigidement sur un corps de base (20, 30) de la pièce de fermeture (2, 3) respectivement associée,
**caractérisé par**
un élément de blocage (36) disposé sur l'une des pièces de fermeture (2, 3), qui, lors de l'application des pièces de fermeture (2, 3) l'une sur l'autre, peut être dévié à partir d'une position de base sur la pièce de fermeture (2, 3) associée, de sorte que la première saillie d'insertion (220, 221) et la deuxième saillie d'insertion (320, 321) peuvent être mises en prise l'une avec l'autre pour fermer le dispositif de fermeture (1), dans lequel l'élément de blocage (36) est réalisé pour revenir dans sa position de base lors ou après la réalisation de l'insertion pour verrouiller l'insertion par coopération de formes de la première saillie d'insertion (220, 221) et de la deuxième saillie d'insertion (320, 321) l'une avec l'autre dans la position de fermeture.

2. Dispositif de fermeture selon la revendication 1, **caractérisé en ce que** l'élément de blocage (36) est disposé de manière pivotante sur la pièce de fermeture (2, 3) associée.

3. Dispositif de fermeture selon la revendication 1 ou 2, **caractérisé en ce que** la première pièce de fermeture (2) et la deuxième pièce de fermeture (3) présentent chacune au moins un élément magnétique (250, 251, 350, 351) qui mettent en œuvre ensemble le système magnétique (25, 35) et agissent de manière à s'attirer magnétiquement lors de la fermeture du dispositif de fermeture.

4. Dispositif de fermeture (1) selon la revendication 3, **caractérisé en ce que** l'au moins un élément magnétique (250, 251) de la première pièce de fermeture (2) et l'au moins un élément magnétique (350, 351) de la deuxième pièce de fermeture (3) sont réalisés pour coopérer lors de l'application de la première pièce de fermeture (2) et de la deuxième pièce de fermeture (3) l'une sur l'autre, de sorte qu'une composante de la force d'attraction magnétique agit dans une direction d'insertion (Y) dans laquelle la première saillie d'insertion (220, 221) et la deuxième saillie d'insertion peuvent être mise en prise l'une avec l'autre.

5. Dispositif de fermeture (1) selon la revendication 4, **caractérisé en ce que** l'au moins un élément magnétique (250, 251) de la première pièce de fermeture (2) et l'au moins un élément magnétique (350, 351) de la deuxième pièce de fermeture (3) sont décalés l'un par rapport à l'autre dans la position de fermeture, vu le long de la direction d'insertion (Y), de sorte qu'une force d'attraction magnétique agit dans la position de fermeture entre la première pièce de fermeture (2) et la deuxième pièce de fermeture (3) dans la direction d'insertion (Y).

6. Dispositif de fermeture selon l'une quelconque des revendications précédentes, **caractérisé en ce que** deux premières saillies d'insertion (220, 221) sont disposées sur la première pièce de fermeture (2) et deux deuxièmes saillies d'insertion (320, 321) sur la deuxième pièce de fermeture (3), dans lequel les premières saillies d'insertion (220, 221) pour réaliser un premier système d'insertion (22) et les deuxièmes saillies d'insertion (320, 321) pour réaliser un deuxième système d'insertion (32) s'étendent chacune à un angle l'un de l'autre.

7. Dispositif de fermeture (1) selon la revendication 6, **caractérisé en ce que** les premières saillies d'insertion (220, 221) et les deuxièmes saillies d'insertion s'étendent respectivement obliquement par rapport à une direction d'insertion (Y) dans laquelle les systèmes d'insertion (22, 32) peuvent être mis en prise les uns avec les autres.

8. Dispositif de fermeture (1) selon la revendication 6 ou 7, **caractérisé en ce que** la première pièce de fermeture (2) présente une saillie d'insertion (23) supplémentaire au premier système d'insertion (22) et la deuxième pièce de fermeture (3) une saillie d'insertion (33) supplémentaire au deuxième système d'insertion (32), dans lequel la saillie d'insertion (23) supplémentaire au premier système d'insertion (22) est décalée par rapport aux premières saillies d'insertion (220, 221) le long de la direction d'insertion (Y) et la saillie d'insertion (33) supplémentaire au deuxième système d'insertion (32) est décalée par rapport aux deuxièmes saillies d'insertion (320, 321) le long de la direction d'insertion (Y).

9. Dispositif de fermeture (1) selon la revendication 8, **caractérisé en ce que** la saillie d'insertion (23) supplémentaire au premier système d'insertion (22) et la saillie d'insertion (33) supplémentaire au deuxième système d'insertion (32) s'étendent respectivement perpendiculairement à la direction d'insertion (Y).

10. Dispositif de fermeture (1) selon l'une quelconque des revendications précédentes, **caractérisé en ce qu'**au moins un des éléments de contact électrique (24, 34) présente un ressort de contact (340) qui est déformable élastiquement lors de l'application des pièces de fermeture (2, 3) l'une sur l'autre.

11. Dispositif de fermeture (1) selon l'une quelconque des revendications précédentes, **caractérisé en ce que** lors de l'application des pièces de fermeture (2, 3) l'une sur l'autre et/ou lors du détachement des pièces de fermeture (2, 3) l'une de l'autre, l'au moins un premier élément de contact électrique (24) et l'au moins un deuxième élément de contact électrique (34) glissent tangentiellement l'une sur l'autre avec des surfaces (240).

12. Dispositif de fermeture (1) selon l'une quelconque des revendications précédentes, **caractérisé en ce que** l'une des pièces de fermeture (2, 3) présente un élément de guidage (31), qui, lors de l'application des pièces de fermeture (2, 3), s'insère dans une ouverture de guidage (21) de l'autre des pièces de fermeture (2, 3) pour guider le mouvement d'application des pièces de fermeture (2, 3) l'une par rapport à l'autre.
